(19) Europäisches Patentamt
European Patent Office
Office européen des brevets

(11) Publication number: **0 246 732 B1**

# (12) EUROPEAN PATENT SPECIFICATION

(45) Date of publication of patent specification: **13.05.92**

(51) Int. Cl.⁵: **D01F 6/60**, C08G 69/32, D01D 5/38

(21) Application number: **87302049.9**

(22) Date of filing: **10.03.87**

## (54) Process for preparing aromatic polyamide fibre and film.

(30) Priority: **15.05.86 KR 863826**
**15.05.86 KR 863827**
**23.07.86 KR 865983**
**23.07.86 KR 865984**

(43) Date of publication of application:
**25.11.87 Bulletin 87/48**

(45) Publication of the grant of the patent:
**13.05.92 Bulletin 92/20**

(84) Designated Contracting States:
**AT DE FR GB IT NL**

(56) References cited:
**EP-A- 0 104 410**
**GB-A- 1 283 065**

**PATENT ABSTRACTS OF JAPAN, vol. 11, no. 232 (C-437)[2679], 29th July 1987, page 2679; & JP-A-62 45 716 (ASAHI CHEM IND CO LTD) 27-02-1987**

(73) Proprietor: **Kolon Industries Inc.**
**45, Mugyo-dong**
**Jung-gu Seoul(KR)**

(72) Inventor: **Park, Ho Jin**
**4-107, Jinjoo Apt. Jamsil 4-Dong**
**Seoul(KR)**
Inventor: **Rhim, Hoo San**
**A-305, 792, Goangpyung-Dong**
**Kumi-City Gyungsangbuk-Do(KR)**
Inventor: **Kim, Hak Mook**
**290-3, Wonpyung-Dong**
**Kumi-City Gyungsangbuk-Do(KR)**
Inventor: **Kim, Du Heyn**
**5-17, Beomeo 3-Dong**
**Suseong-Gu Deagu-City(KR)**
Inventor: **Yoo, Seog Chul**
**75-12, Soyangro 2-Ga**
**Chunceon-City Kwangwon-Do(KR)**
Inventor: **Kim, Sang Ho**
**900-112, Bongcheonbon-Dong**
**Goanak-Gu Seoul(KR)**
Inventor: **Park, Sang Bong**
**212, Gongdan-Dong**
**Gumi-City Gyungsangbuk-Do(KR)**
Inventor: **Han, Ihn Sik**
**624, Bugi 2-Dong Jinryang-Myeon**
**Kyungsan-Gun Gyungsangbuk-Do(KR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

Inventor: **Park, Jong Tae**
**332-20, Bisan 4-Dong**
**Daegu-City(KR)**
Inventor: **Kim, Si Min**
**DA-113, Cosmos Apt., 1111 Daemeong 6-Dong**
**Nam-Gu Daegu-City(KR)**

(74) Representative: **Lawrence, Peter Robin Broughton et al**
**GILL JENNINGS & EVERY 53-64 Chancery Lane**
**London WC2A 1HN(GB)**

## Description

There is a need for very light but strong fibrous and film materials in, for instance, the aircraft and aerospace industry. High strength and high modulus inorganic fibres have been developed by using ceramics, graphite or boron and have been used. However their use is restricted because they are very expensive and difficult to make and handle. Aromatic polyamide fibres have high strength, high durability to friction, and high modulus, and are easier to make, and so have been widely adopted. They are widely used as reinforcing materials for plastics in the aircraft and other industries and as a replacement for glass in reinforced resins as building materials. However there is still a need to improve their production and properties.

DE-A-1,810,426 discloses a method for increasing the tensile strength and modulus of the fibre by wet-spinning using aromatic polyamide dope having optically anisotropic property, and heating the fibre or film while applying tension. Pulp-like short fibres made by the above method have been widely employed as insulating materials, adiabatics, and friction resistant materials, in place of asbestos.

In US-A-3,869,429 and US-A-869,430 inorganic salt and aromatic diamine are dissolved in an amide solvent, the diamine is polymerised with aromatic diacid chloride at a low temperature to make the polymer in an acid crumb form, and the crumb is washed to remove the polymerisation solvent and inorganic salt and is continuously dried. Liquid crystalline dope is obtained by redissolving the polymer in 20% by weight sulfuric acid or chlorosulfuric acid or fluorosulfuric acid. This dope is then spun through an orifice into water, neutralised, washed, dried and treated by mechanical processes to prepare the aromatic polyamide fibre and film. Unfortunately the process is costly (partly because of corrosion of apparatus by the acid) and somewhat dangerous, and the polymer can be decomposed in the dope so that the property of the fibres is reduced. Also the process yields an inorganic sulfate, often $CaSO_4$, as a by-product which is difficult to handle, and the colour of fibres changes with time due to residual sulfuric acid.

The compression strength of the fibre obtained by this method is much weaker than the theoretical value and the resistance to chemicals is also weak, because a crystal defect layer is formed in the fibre.

In Japan patent publication SHO 59-47694, aromatic polyamides of low molecular weight are dissolved in an amide solvent, the resulting solution is mixed with water or alcohol as a precipitatant and is stirred to produce pulp-like fiber particles. The inherent viscosity of the fibre is about 2 to 3.5 at most. The properties are inadequate and high quality aromatic polyamide short fibres cannot be easily prepared.

In US-A-4,511,623 highly oriented and high strength aromatic polyamide short fibres having an inherent viscosity of 5 to 7 are made by adding tertiary amine (e.g., pyridine) prior to the polymerisation reaction and applying a high mechanical shearing rate (160 $cm^{-1}$) at the moment gelation is achieved. This rapidly increases the rate of polymerisation, producing a high degree of orientation and a high degree of polymerisation. However because the amide solvent and excess tertiary amine are added simultaneously, the viscosity increases suddenly while adding terephthaloyl chloride and the polymerisation is rapidly terminated within 10 seconds. Accordingly control of the process is very difficult and it is impossible to produce satisfactory fibres continously.

US-A-3,672,143 and US-A-3,817,941 disclose methods where the polymerisation is performed in the presence of a chain terminator in a solution to form a dope which is spun or ejected by extrusion into water as a precipitatant. The fibres are therefore obtained by a simple process but it is difficult to obtain adequate molecular weight because of the use of a chain terminator during polymerisation and water as a precipitatant.

Another known method, which is referred to below as the "prior method", for preparing aromatic polyamide fibre comprises polymerising, washing, preparing 20% by weight dope of high molecular weight poly-(p-phenylenediamine terephthalate) and concentrated sulfuric acid, and spinning into water through an air gap to produce fibres. This method is described in Journal of Polymer Science; Polymer Physics Edition, Vol 21, 1955-1969 (1983).

Patent Abstract of Japan, 11.232 (C-437) [2679] (1987) discloses the preparation of polyamide fibres by first forming a pre-polymer dope in an amide-type solvent, then extruding the dope into a fluid inert to acid halide.

It is based on the principle that the orientation of the polymer molecules occurs as a result of drawing during spinning of the concentrated (20%) solution. However, even though the molecular chain of the aromatic polyamide is rigid and the polymer is stretched while in the form of liquid crystals, complete orientation of the molecular chain cannot occur due to the dope having a high viscosity of more than 100 Pa.s (1,000 poise) at 80 ° C.

The resulting aromatic polyamide fibres have an outer skin and inner core. The microscopic structure is shown diagrammatically in Figures 6(a) and (b) of the accompanying drawings. The core portion has crystal defects every 250 nm and a radially arranged pleated sheet structure, while the skin portion has a compact and well-oriented structure. The fibre strength is considerably lower than the theoretical strength because of the radially arranged pleated sheet structure of the core portion.

A report in J. Polym. Sci., Polym. Phys. Ed 21, 1757 (1983) discloses spinning after preparing a sulfuric acid dope. In that case, the chain ends of the polymer are ionised to $NH_3^+$, $HSO_4^-$ and form ionic clusters which comprise defect bands along the fibre axis. When a force is applied, a weak crystal defect layer is formed and so strength and chemical resistance decrease. In this paper, it is stated that the strength can be increased by preventing cluster formation, but it is impossible to attain this by known methods.

In the case of polyethylene, the strength of fibres is generally less than 4.45 dN/ tex (5 g/d). However, if the molecular chains are stretched by the spinning method known as gel spinning, the strength is increased to at least 17.8 dN/ tex (20 g/d). Although the chemical structure of the two products are the same, their properties are remarkably different owing to their different crystalline structures.

The object of the present invention is to provide aromatic polyamide fibre and film having improved strength and other properties as a result of having a high degree of orientation.

This is now achieved by first forming a liquid crystalline pre-polymer dope and then, in a separate but sequential stage, effecting a molecular orientation polymerisation process in which the final polymerisation and the molecular chain orientation occur simultaneously. This overcomes the prior disadvantages, such as the economic disadvantages of a multistep process involving forming polymer, then converting it to dope and then spinning it, and the difficulty of process control due to a sudden increase in the degree of polymerisation and the disadvantages of a low degree of polymerisation.

In the invention the manufacturing cost is inexpensive and process control is easy and the polymer and product can be produced successively and directly in the same overall process. The final aromatic polyamide fibre or film can have an inherent viscosity higher than 3.0, random molecular chain end distribution, and can be substantially free of a crystal defect layer perpendicular to the fibre axis, and can be stable against colour change on storage. The fibre can have a tensile strength above 13.4 dN/ tex (15 g/d). The film can have a tensile strength above 1.28GPa. It is novel. Textiles can be made from it in conventional manner and short fibres can be used as reinforcement for resins.

In the present invention, aromatic polyamide in the form of fibre and film is made by a process comprising polycondensing difunctional aromatic amine and acid chloride while dissolved in a first solvent comprising a solution in an amide or DMSO of an inorganic salt and thereby forming a liquid crystalline prepolymer dope (LCPD), extruding the dope as a fibre or film product with or into a precipitating solvent comprising a polymerisation accelerator which comprises a tertiary amine that will complete the polycondensation of the prepolymer, and stretching the extruded product while completing the polycondensation.

The dope is preferably extruded directly after formation of the prepolymer, generally just before gelation. Typically it is when the dope is opalescent on stirring. The dope should be preferably optically anisotropic, and advantageously should be formed at low temperature.

The first solvent may include a small amount of tertiary amine.

The precipitating solvent must accelerate the polymerisation and comprises a tertiary amine. It may also comprise other solvent mixed with the tertiary amine, often an amide solvent. Inorganic salt may be dissolved in it.

The prepolymer is preferably a homopolymer or copolymer having the formula

$$-CO-R_1-CO-NH-R_2-NH \quad (I)$$

or

$$-CO-R_3-NH- \quad (II)$$

wherein $R_1$ and $R_2$ are the same or different and are present generally in equivalent molar amounts and $R_1$, $R_2$ and $R_3$ are each an aromatic group, preferably selected from

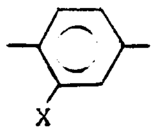
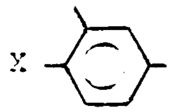
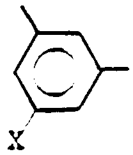
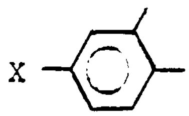
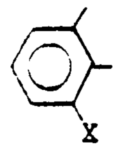

wherein X is H, Cl, Br or I,

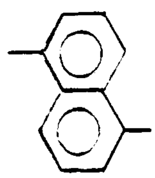
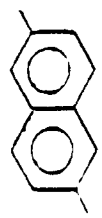
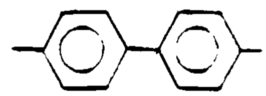
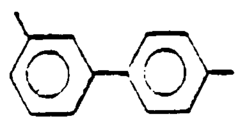

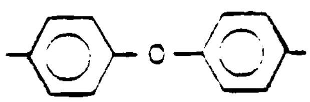
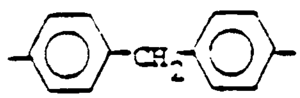
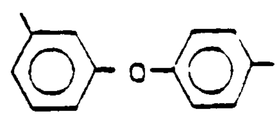

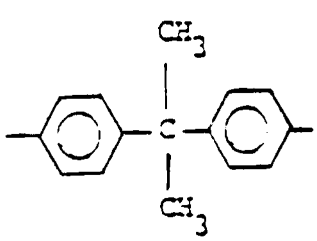
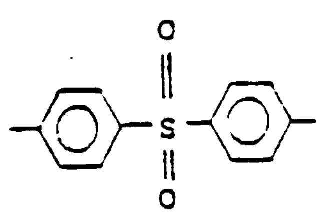

The rings may include optional substituents such as X, where X may be Cl or another halogen atom. The prepolymer is formed by polycondensation between aromatic diamine and aromatic diacid chloride. Preferably a solution is formed of the diamine in the first solvent and then the dichloride is added, usually in a substantially equimolar amount.

Polymerisation continues to just before gelation. At this time the prepolymer in the dope preferably has an inherent viscosity (I.V.-D) of from 1 to 4 and the dope may have stir opalescence. The resulting LCPD is extruded into or with the polymerisation accelerating-precipitation solvent. In one method the LPCD is spun

into the precipitating solvent and drawn off with a spin-stretch factor of from 1 to 4, generally at a temperature of -40 to +50°C. This yields a film or endless fibre. In another method short fibres are made by extruding the LPCD into or with the precipitating solvent and applying shear. Thus they may be simultaneously ejected by extrusion or contacted with each other and the LCPD is subjected to at least a shear rate of 20 $s^{-1}$. As a result the aromatic polyamide fibre is obtained as a pulp-like short fibre.

The microscopic structure of the final film or fibre product is a fully extended chain structure having sufficient molecular orientation of its polymeric structure. It has random chain end distributions in the direction of the fibre or film axis. Thus, the fibre and film of this invention are substantially or wholly free of crystal defect layers such as defect zones caused by $NH_3^+$, $HSO_4^-$ ionic clusters. The product has a unique structure characterised as generally having an inherent viscosity of at least 3.0, and the fibre having a tensile strength of at least 13.4 dN/ tex (15g/d), or the film having a tensile strength of at least 1.28GPa.

The LCPD is the polymerisation solution and it may be formed by dissolving aromatic diamine in an amide solvent containing inorganic salts and optionally a little tertiary amine and cooling in the presence of nitrogen, and causing solution polymerisation by reaction with aromatic diacid chloride at a temperature of less than 40°C. The monomer and solvent should be as pure as possible so as to optimise the molecular weight and the polymerisation should occur substantially quantitatively. The monomers and solvent should be as dry as possible. The first solvent may be a mixture of organic solvents such as amides (including ureas) and inorganic salts, optionally with some tertiary amine. The amide or urea or other solvent may be selected from N-methyl-2-pyrrolidone (NMP), N,N-dimethylacetamide (DMAc), hexamethylphosphoramide (HMPA), N,N-dimethylformamide (DMF), N,N-dimethyl sulfoxide (DMSO), and N,N,N′,N′-tetramethylurea, (TMU), N-methylpiperidone, N-methylcaprolactam, N-acetylpyrrolidine, N-ethylpyrrolidine, dimethylpropionamide, dimethyl isobutyramide, and dimethylpropylurea.

The amount of tertiary amine, if present, in the first solvent, is preferably about 0.01 to 2% by weight of the first solvent. Examples are pyridine (Py), quinoline, triethylamine, dimethylethylamine, t-butylamine, quinuclidine, picoline, pyrimidine, pyrazine and quinoxaline.

If the amount of tertiary amine in the first solvent is less than 0.01% by weight, the desired effect of tertiary amine addition, namely an increased polymerisation rate, is not achieved. If the amount is more than 2% by weight, control of the reaction rate and the process becomes difficult.

Inorganic salts are used in order to increase the solubility of the polymer. Preferred inorganic salts include metal halides such as LiCl, $CaCl_2$, KCl, KBr, and LiBr. The amount is preferably 0.5 to 15% by weight (Weight of salt/Volume of amide solvent).

In a preferred process p-phenylenediamine and terephthaloyl chloride are added to the amide solvent containing the above inorganic salts, optionally containing some tertiary amine, and then the resulting mixture is stirred. Poly(p-phenyleneterephthalamide) (PPDT), represented by following formula (III), is obtained as a prepolymer solution in the LCPD

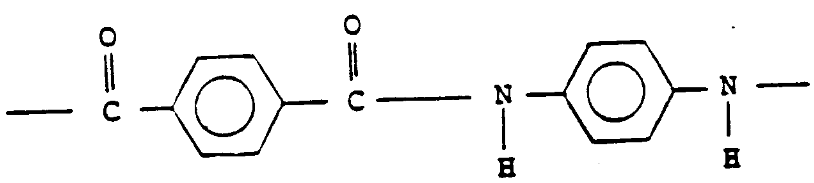

(III)

In contrast to the prior method where the polymer is separated from the polymerisation mixture and is then redissolved, in the invention the prepolymer solution is directly used as the dope.

The LCPD preferably has a polymer concentration of 4 to 20% by weight. When the amount is greater than 20% by weight, LCPD may not be suitable for use as dope because extrusion may be difficult and the reaction rate may increase suddenly and so process control may become difficult. If the mount is less than 4% by weight, the inherent viscosity of the final polymer may decrease remarkably, and the process may become less economic.

A suitable inherent viscosity of the prepolymer in the LCPD ranges between 1.0 and 4.0, preferably between 1.5 and 3.5. Extrusion may be difficult if I.V.-D is too high.

The LCPD may be transferred to a temperature-controllable extrusion device, e.g., a cylinder of slot, having one or more extrusion orifices, and spun into the polymerisation accelerating-precipitation solvent.

The polymerisation - acceleratingprecipitation solvent contributes to the improvement in the degree of polymerisation and the molecular orientation. For instance the shear force of the solvent may promote formation of hydrogen bonds between the amide bonds.

Tertiary amine is preferably used alone or as a mixed solvent with amide, preferably one of the amides named above. A suitable amount of amide solvent is 10 to 90% by volume of the tertiary amine solvent. Inorganic salt, generally one of those named above, may be included, generally in an amount of 0.01 to 10% of the precipitating solvent.

The tertiary amine solvent alone, or mixed solvent of amide solvent and tertiary amine solvent, should be used in an amount greater than is required to react with all the HCl produced by reacting the diacid chloride and diamine.

Any of the tertiary amines mentioned above may be used but pyridine is preferred. The tertiary amine, and all solvent components, should be substantially pure and dry. The amount of moisture in the tertiary amine should be below 5000 ppm.

The process of contacting the LCPD and polymerisation-accelerating precipitation solvent is usually carried out at a temperature of less than 50°C, preferably -40 to 50°C. Below -40°C additional equipment would be required to maintain the temperature, and this causes an increase in manufacturing costs. In general, the lower the temperature, the better the molecular orientation effect; a temperature of higher than 50°C results in less molecular orientation. The contact process is preferably carried out at -10°C to 40 or 45°C, and more preferably at 0 to 25°C, e.g., room temperature.

The diameter of nozzles through which the LCPD is extruded is preferably 50 $\mu$m to 10,000 $\mu$m. The ratio of tube length to nozzle diameter or width (L/D) in the spinning-nozzle jet is preferred to be 0.5 to 10, especially when the resultant produce is spun or drawn off as a continuous fibre or film. The use of a small nozzle promotes penetration by the tertiary amine solvent and thus tends to increase the final inherent viscosity and the degree of molecular orientation can be improved. Similarly, when the product is drawn off, adjusting the speed of winding will control the molecular orientation of the polymer.

The longer the contact time between LCPD and polymerisation-accelerating precipitation solvent the better, but too long may be impracticable. Therefore, it is preferred that the contact time is within the range of 0.1 to 1,000 s.

Also, the spinning speed ("JV", the average velocity of LCPD in the tube of the spinning nozzle calculated from the cross-sectional area of the orifice and the volume of LCPD passing through the orifice) is generally 1 m/min to 30 m/min, preferably 50 to 100 m/min. The spin-stretch factor (SSF) refers to the ratio of fibre winding speed to the ejecting speed, and is preferably in the range 1 to 4.

Pulp-like short fibres may be made from the continuous filament or film before drying by known methods. Thus the filament fibre or film may be transferred to a grinder through a feed roll, and chopped and ground by mechanical treatment.

The invention also includes a process for directly preparing the pulp-like short fibre by ejection or by contact with the above LCPD having optical anisotropy and the polymerisation accelerating-precipitation solvent under a shear rate of at least 20 $s^{-1}$. Suitable apparatus is described in more detail below.

When the fibre and film obtained by the foregoing process are treated with heat under tension, their various properties are improved; for example, the modulus increases 30 to 300% and elongation decreases 30 to 200% of the virgin fibre.

In the accompanying drawings:

Figure 1 is a schematic diagram of apparatus which can be used according to the invention for making short fibres;

Figure 2 is an enlarged cross-sectional view of the nozzle jet in Figure 1;

Figure 3 is a schematic diagram of different apparatus which can be used according to the invention for making short fibres;

Figure 4 is a schematic diagram of a third process of the invention for making short fibres;

Figure 5 is an enlarged cross-sectional view of the extrusion apparatus 46, in Figure 4;

Figure 6(a) is a partially cut-away perspective drawing depicting the structure of the aromatic polyamide fibre according to the prior method;

Figure 6(b) is an enlarged drawing of the core portion having a pleated sheet structure in the aromatic polyamide fibre according to the prior method;

Figure 7 is a cut-away perspective drawing depicting the structure of aromatic polyamide fibre according to the present invention;

Figure 8(a) is a picture of the aromatic polyamide fibre according to the prior method, taken with a scanning electron microscope, at 3000 magnification;

Figure 8(b) is a picture of the aromatic polyamide fibre according to the present invention, taken with a scanning electron microscope, at 1000 magnification;

Figure 9(a) is a picture of the prior art aromatic polyamide fibre taken with a polarizing microscope;

Figure 9(b) is a picture of the aromatic polyamide fibre according to the present invention, taken with a polarising microscope;

Figure 10(a) is a picture of the prior aromatic polyamide fibre etched and taken with a scanning electron microscope at 10,000 magnification;

Figure 10(b) is a picture of the aromatic polyamide fibre according to the present invention, etched by NaOH and taken with a scanning electron microscope at 10,000 magnification;

Figure 11(a) is a picture of the prior aromatic polyamide fibre, taken with a transmission electron microscope; and

Figure 11(b) is a picture of the aromatic polyamide fibre according to the present invention, taken with a transmission electron microscope.

The properties of the products made in the invention may be evaluated in terms of their inherent viscosity (I.V.-P) calculated from the equation

$$I.V.\text{-}P = \frac{\text{Inh}(\eta\text{rel})}{C}$$

wherein $\eta$ rel represents relative viscosity; and C represents a concentration of 0.5 grams of polymer in 100 ml of sulfuric acid.

The relative viscosity, $\eta$ rel is the flow time ratio between a sulfuric acid and a solution of the polymer. Flow times are determined at 30 ° C by a capillary viscometer, using mainly concentrated sulfuric acid (95 to 98%) as a solvent.

The invention is remarkably different from the prior art, as follows.

First, the LCPD may be spun into a polymerisation accelerating-precipitation solvent with a spin stretch factor of 1 to 4 or it is ejected by extrusion under a shear rate of more than 20 $s^{-1}$ by the polymerisation accelerating-precipitation solvent, and the desired aromatic polyamide fibre and film having high strength and high degree of orientation is obtained by simultaneous molecular orientation and polymerisation of the polymer.

Second, in the invention there are two separate processes, namely one for making LCPD and the other for preparing a polymer having high degree of polymerisation with the proper molecular orientation. It is therefore possible to optimise individual processing conditions, for example the polymer content in the polymerisation solvent, the temperature of polymerisation, and the temperature of contacting the LCPD and the precipitation solvent. The prepolymer of the LCPD can maintain an inherent viscosity of 1.0 to 4.0 for 30 minutes and so process control becomes easy.

Third, the inherent viscosity of fibre and film can be improved to more than 3.0 by the molecular orientation polymerisation method using the tertiary amine solvent. Moreover, the fibre or film, having a high degree of orientation and an extended molecular chain, can be prepared easily because it is possible to accelerate the polymerisation rate and the orientation of the molecular chains by the polymerisation accelerating-precipitation solvent.

Fourth, the fibre and film can directly be prepared during the polymerisation process without the traditional process steps of separating polymer from the resulting solution, washing, preparing sulfuric acid dope, and spinning. So, the whole process becomes simple and economical, and the fibre is not decolorised by residual sulfuric acid.

Fifth, the size (length and diameter), shape, and inherent viscosity of the fibre and film can be easily controlled by changing the extrusion pressure, the spin-stretch factor, the length of the transfer line, and the diameter of nozzle.

Sixth, the polymerisation accelerating-precipitation solvent can be reused provided it has not become contaminated with impurities that affect the degree of polymerisation.

The product of the process is considerably superior to prior fibres as follows.

When a prior aromatic polyamide having a pleated sheet structure as shown in Figure 6 is examined under a polarising microscope, transverse bands perpendicular to the axis of fibre are observed at intervals of about 500 to 600 nm, and also defect zones are observed along the axis of fibre, as shown in Figure 9-(a), which also shows the skin-core. As a result of the above structural features, the prior fibre has low strength and modulus, especially insignificantly low compression strength, and there are many restrictions on its use as a substitute for asbestos or glass fibres or as reinforcement for plastics and rubbers.

Moreover, the molecular chains of prior fibres cannot be fully oriented and have crystal joints, and the fibres are easily dissolved by strong acids such as sulfuric acid, chlorosulfuric acid and fluorosulfuric acid, and also they are hydrolysed by acids or alkalis.

Figure 10(a) is a picture of a prior aromatic polyamide fibre taken with SEM after being etched by NaOH (or HCl) to remove a layer 2 nm thick. The defect bands are etched preferentially. Crystal defect layers exist along the axis of the fibre at regular intervals.

The prior fibres have a double structure of skin-core portions resulting from an insufficient orientation due to the high viscosity of more than 100 Pa.s (1,000 poise) and the concentration of polymer (20%) and the sulphuric acid used in the dope.

On the other hand, in the novel aromatic polyamide (eg., PPDT) fibre and film, the preferred molecular orientation is easily achieved at a comparatively low molecular weight and the crystal defects are uniformly distributed. As shown in Figure 8(b) the fibre does not have crystal defect layers and as shown in Figure 9-(b) it does not have transverse bands and skin core effects.

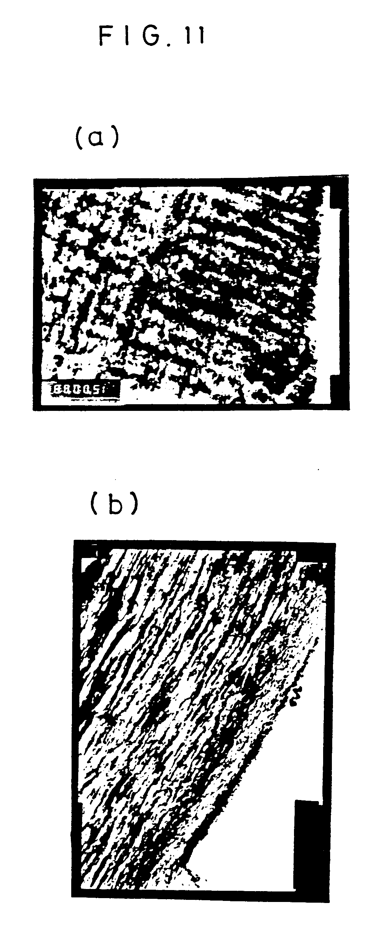

It is not a double structure divided into skin-core portions but is a unique structure similar to the skin portion (0.1μm) of the prior fibre, as shown by Figure 10(b). The crystal defect layer does not exist there, as shown by Figure 11(b).

As a result, the fully extended aromatic polyamide fibre and film obtained in the invention can have excellent properties such as denier D, strength, modulus (mi), tensile strength (T), elongation (E), and compression strength, as compared with prior fibres.

Typical properties of PPDT fibre according to this invention are compared to those of the prior fibre in Table 1.

Table 1

| | Prior Fibre | Invention | | | | |
|---|---|---|---|---|---|---|
| IV-P | 5.3 | 1.5 | 2.0 | 3.0 | 5.3 | 6.2 |
| Tensile strength | 22 | 4.5 | 15.2 | 20 | 26 | 31 |
| Elongation (%) | 3-4 | 6 | 6 | 2.1 | 2.1 | 1.0 |
| Modulus (g/d) | 480 | 440 | 510 | 760 | 460 | 520 |
| Modulus (dN/ tex) | 427 | 392 | 454 | 676 | 409 | 463 |

The following examples and comparative examples illustrate the invention. Examples 14 to 23 were conducted using the apparatus illustrated in Figure 1 and 2, Examples 24 to 28 using the apparatus of Figure 3, and Examples 29 to 32 using the apparatus of Figure 4.

Figure 1 is a schematic diagram of the manufacturing process according to Example 14 of the invention. A reaction vessel 1 contains the LCPD and a separate storage vessel 2 stores the polymerisation accelerating-precipitation solvent. The LCPD is fed through a line 3 by an operating gear pump 4 to a nozzle mixer 7 and simultaneously the solvent is fed through line 6 by the circulatory pump 5 to the mixer 7. A plurality of orifices 27 in the line 6 cause the LPCD to be forced into the flow through line 6. Molecular orientation and polymerisation occur in the ejection tube 8. The flow velocity in the transfer line 6 is selected to orient the LCPD and the LCPD:solvent flow velocity ratio is preferably 1:50 to 1:0.1, more preferably 1:15 to 1:0.2.

The diameter of transfer line 3 can be 1.5, 3, 6 or 13 mm and the ejection speed of the LCPD from transfer line 3 is preferably higher than 5 m/min. The diameter of the orifices in the nozzle jet 7 shown in Figure 2 is preferably 0.006 to 1 mm, more preferably 0.01 to 0.7 mm, and the number of orifices ranges from about 5 to 500. The orifices are preferably circular.

The length of the ejection tube 8 is chosen to allow sufficient time for the reaction to be terminated before the fibres are separated from the solvent, e.g., in the vessel 9.

Figure 3 is the process schematic diagram of Example 24. The LCPD is held in the storage tank 21 maintained at a temperature of less than 30°C by the circulation of brine introduced through inlet 22 and discharged through outlet 23. A nitrogen pressure of 196 to 1960 kPa (2 to 20 k/cm$^2$) is applied to the LCPD in storage tank 21 through inlet 24. The LPCD passes through a stainless steel ejection tube 25 of 3 mm diameter and is fed to the impeller 30. The end of the tube 25 is provided with a nozzle, that may be a smaller tube, at its end. The nozzle has a diameter less than 3 mm. It may be of stainless steel. The LCPD is thereby ejected into the polymerisation accelerating-precipitation solvent 28 and is sheared by impeller 30 that is rotated by operating motor 29. The distance between the impeller 30 and the nozzle 27 is preferably less than 2.5 mm in order to increase the shearing force and to cause sufficient intra-molecular orientation, in accordance with a shear rate of about 20 s$^{-1}$.

The LCPD in vessel 26 is polymerised and oriented by the molecular orientation polymerisation method while being stirred and contacted with the polymerisation accelerating-precipitation solvent. It is transferred along the transfer line 31 to the filter 32 by which the fibres are filtered from the solvent. The recovered solvent is returned to the vessel 26 along the circulating tube 34 through a one-way pump 35.

Figure 4 shows the process of Example 29. The solution of aromatic diamine in the amide solvent containing inorganic salts, or additionally containing tertiary amine, is in the reaction vessel 41 under nitrogen as in Example 14. This solution is added to the mixer 43 and aromatic diacid chloride from tank 42 is simultaneously fed to the mixer 43, in stoichiometric amounts.

The LCPD obtained by reacting the two components in the mixer 43 is transferred to the inlet 48 of an ejector 46 at a flow rate controlled by the gear pump 45, just after the removal of gases by a vacuum pump 44. The LCPD is contacted in the ejector 46 with polymerisation acceleration-precipitation solvent provided through feed lines 47 from solvent store tanks 57.

This ejector 46 is shown in Figure 5. The solvent is flowed towards the LPCD at a contact angle 49 and the streams are simultaneously ejected through the conflux ejection orifice 50 with a shear rate of at least 20 $s^{-1}$. The orifice 50 is preferably circular in shape and may have a size of 0.005 mm to 50 nm. L/D (the ratio of length to diameter of orifice) of the conflux ejection orifice 50 is preferably in the range of 1 to 10.

The contact angle 49 is preferably in the range of 20° to 80°. If it is less than 20°, the effect of molecular orientation increases but the grinding effect decreases. If it is more than 80°, the effect of molecular orientation decreases and the grinding effect increases. Preferably it is 40° to 50°.

The ejection speed is preferably 1 m/min to 300 m/min, and the most preferable length of conflux ejection orifice 50 is 100 mm to 1,000 mm in order to allow the LCPD and the solvent to make good contact.

The ejected LCPD and solvent are divided into a solid phase and a liquid phase by the filter conveyer 51, and the fibres are transferred to a roller 52, and recovered in the recovery vessel 54 by scrubber 53. The polymerisation accelerating-precipitation solvent is recovered into storage 57 along recovery line 56 using a pump 55.

## Example 1

A 4-neck flask of 5 l is purged with nitrogen gas and then the moisture in the flask is removed as much as possible and 1,200 ml of NMP is introduced. The temperature is increased to 100°C, 27.0 g of $CaCl_2$ is completely dissolved into the solution and 24.5 g of PPD is dissolved sufficiently into the solution.

45.95 g of TPC is added while cooling the resulting mixture using an ice bath, and stirring well for 15 minutes with a stir speed of 3,000 rev/min (rpm). The resultant LCPD is transferred to a cylinder having an extrusion orifice having diameter = 0.7 mm and L/D = 0.5. The LCPD is spun into pyridine as precipitating solvent and is simultaneously wound at 20 m/min. The wound fibre is washed with water and dried to obtain the object aromatic polyamide fibre having an inherent viscosity (I.V.-P) of 5.0 and D/E/T/Mi of 3/7/21/476.

## Example 2

The process of Example 1 is repeated but with the materials and results shown by Table 2.

Table 2

| Exp. No. | Pre-Polymerisation | | | Precipitation solvent | I.V.-P | D/E/T/Mi |
|---|---|---|---|---|---|---|
| | Solvent | Salt | Time | | | |
| 1 | NMP | $CaCl_2$ | 6 | Py (2.1) | 4.8 | 1.5/3/22/550 |
| 2 | NMP | $CaCl_2$ | 8 | Py (1.51)/NMP (0.51)/$CaCl_2$ 0.01% | 5.2 | 2/5/20/450 |
| 3 | NMP | $CaCl_2$ | 11 | Py/$CaCl_2$ 5% | 6.1 | 2.5/4/19/518 |
| 4 | DMAc | LiCl | 7 | Py (21) | 4.9 | 3/3.5/23/560 |
| 5 | DMAc | LiCl | 7 | Py (151) /DMAc | 5.9 | 2/4.5/21/530 |
| 6 | DMAc | LiCl | 9 | Py/NMP (1.71/0.71 | 6.1 | 1.5/4.6/20/485 |
| 7 | DMAc | LiCl | 8 | Py/acetone (1.51/0.51 | 6.7 | 2.5/6.0/22/478 |

In this table, for instance Py/$CaCl_2$ 5% means that the solvent is pyridine containing 5% by weight $CaCl_2$.

Example 3

Example 1 is repeated, using pyridine as the precipitating solvent but with the materials and results shown in Table 3.

Table 3

| Exp. No. | Polymerisation solvent | Inorganic salt | I.V.-P | D/E/T/Mi |
|---|---|---|---|---|
| 1 | NMP/Py 0.5% | $CaCl_2$ | 5.3 | 1.5/3/20/530 |
| 2 | NMP/Py 1% | $CaCl_2$ | 5.7 | 1.5/4.5/23/510 |
| 3 | NMP/Py 1% | $CaCl_2$ | 6.1 | 2/4/19/5/9 |
| 4 | NMP/Py 2.5% | $CaCl_2$ | 6.2 | 2.5/3.5/31/525 |
| 5 | DMAc/Py 1% | LiCl | 5.5 | 2/3.5/23/490 |
| 6 | DMAc/Py 2% | LiCl | 5.9 | 2.5/3/21/515 |
| 7 | NMP(1080ml)/HMPA(120ml)/Py 1% | $CaCl_2$ | 6.0 | 3/3.0/24/540 |
| 8 | NMP(1080ml)/DMAc(120ml)/Py 1% | LiCl | 5.8 | 3/4/20/515 |

Example 4

Example 1 is repeated but the solvents, L/D and spin stretch factor (SSF) are in accordance with Table 4.

Table 4

| Exp. No. | Polymerisation solvent | Precipitation solvent | L/D | SSF | I.V.-P | IV-W |
|---|---|---|---|---|---|---|
| 1 | NMP | Py(2. 5l) | 0.5 | 2.5 | 6.8 | 2.5 |
| 2 | NMP | Py/NMP(2.2l/0.3l) | 0.5 | 2.5 | 6.1 | 2.3 |
| 3 | NMP | Py/NMP(2.0l/0.5l) | 1.0 | 2.0 | 5.9 | 2.1 |
| 4 | NMP | Py/$CaCl_2$ 7% | 1.0 | 2.0 | 4.5 | 1.8 |
| 5 | DMAc | Py(2.0l) | 0.5 | 2.5 | 5.4 | 2.0 |
| 6 | DMAc | Py/DMAc (1.8l/0.2l) | 0.5 | 2.5 | 6.1 | 2.2 |
| 7 | DMAc | Py/DMAc (1.5l/0.5l) | 1.0 | 2.5 | 5.1 | 2.1 |
| 8 | DMAc | Py/LiCl 7% | 1.0 | 2.5 | 4.8 | 1.9 |
| I.V.-W is the inherent viscosity obtained when, in a comparative test, the dope is extruded into water instead of the precipitation solvent. | | | | | | |

Example 5

150 ml of NMP and 50 ml of DMAc are introduced into a dry 1 l 4-neck flask. After dissolving the mixture, 5.4 g of $CaCl_2$ and 4.9 g of PPD are added and completely dissolved. 9.19 g of TPC is added while stirring. The temperature during the polymerisation is controlled by circulating cooling water, and is maintained at 40 °C.

After the resulting solution is stirred for approximately 20 minutes, the LCPD is span into pyridine through an orifice having a diameter of 0.6 mm and L/D of 0.8, and is wound with a winding speed of 40 m/min. The resultant fibre is washed with water and dried.

The I.V. of the fibre is 4.9 and D/E/T/Mi is 3/12/21/450.

Example 6

The process of Example 5 is repeated except that the polymerisation solvent is replaced and SSF and L/D are adjusted, as shown in Table 5.

Table 5

| Exp. No. | Polymerization solvent | SSF | L/D | Precipitation solvent | I.V.-P | D/E/T/Mi |
|---|---|---|---|---|---|---|
| 1 | NMP(180ml)/DMAc(20ml) | 2.0 | 0.8 | Pyridine | 5.2 | 5/11/18/382 |
| 2 | NMP(100ml)/DMAc(100ml) | " | 1.0 | Pyridine | 4.8 | 10/15/14/350 |
| 3 | NMP(50ml)/DMAc(150ml) | " | 1.0 | " | 6.0 | 3/13/21/451 |
| 4 | NMP(180ml)/HMPA(20ml) | 2.5 | 0.5 | " | 7.1 | 7/9/17/400 |
| 5 | NMP(150ml)/HMPA(50ml) | " | " | " | 4.7 | 4/10/21/340 |
| 6 | NMP(100ml)/HMPA(100ml) | " | 1.0 | " | 5.4 | 2/13/23/500 |
| 7 | NMP(50ml)/HMPA(150ml) | " | " | " | 4.8 | 5/16/17/350 |

Example 7

The process of Example 6 is repeated except that the polymerisation solvent, L/D, SSF and polymerisation accelerating-precipitation solvent are substituted in accordance with Table 6.

TABLE 6

| Exp. No. | Polymerisation solvent | L/D | SSF | Precipitation solvent | I.V.-P | I.V.-W |
|---|---|---|---|---|---|---|
| 1 | NMP(10ml)/DMAc(50ml) | 0.5 | 2.0 | Pyridine (250ml) | 4.9 | 2.3 |
| 2 | NMP(100ml)/DMAc(100ml) | 0.5 | 2.0 | Py(200ml)/NMP(50ml) | 4.6 | 2.0 |
| 3 | NMP(80ml)/HMPA(70ml) | 0.5 | 3.0 | Py(300ml) | 5.0 | 2.1 |
| 4 | NMP(50ml)/HMPA(100ml) | 0.5 | 5.0 | Py(282ml)/NMP(18ml) | 5.4 | 2.1 |
| 5 | DMAc(100ml)/HMPA(500ml) | 0.5 | 5.0 | Py(300ml) | 5.4 | 2.2 |
| 6 | DMAc(30ml)/HMPA(120ml) | 0.5 | 5.0 | Py(200ml)/DMAc(100ml) | 5.2 | 2.3 |

Example 8

After 6.3 g of $CaCl_2$ is added and dissolved in a mixed solvent of 130 ml NMP and 20 ml DMAc, 4.9 g of PPD is dissolved in the mixture, and 9.19 g of TPC is added and allowed to polymerise, while stirring. The temperature is controlled at 40°C by cooling water.

After polymerising for 10 minutes, the resulting LCPD is spun into pyridine through an orifice having a width of 0.7 mm and L/D of 2, and wound with a winding speed of 30 m/min.

The resulting film is washed with water and dried. I.V.-P is 5.1.

Example 9

After 5.4 g of $CaCl_2$ is dissolved in 200 ml of DMAc, 4.9 g of PPD is added and stirred for about 5 minutes. 9.19 g of TPC is added and allowed to polymerise. The temperature is maintained at 10°C by cooling water while stirring for 10 minutes. The resulting LCPD is spun into pyridine through an orifice having a diameter of 0.7 mm and an L/D of 2, and wound at with a winding speed of 30 m/min.

The resultant fibre is washed with water and dried. The fibre has an I.V. of 4.9 and D/E/T/Mi of 31/1.5/22/450.

Example 10

After 3.82 g of LiCl is added and dissolved in 200 ml of DMAc, 4.1 g of PPD is dissolved in the mixture while stirring. 7.66 g of TPC is added and allowed to polymerise. The polymerisation reaction is carried out at a temperature of 40° C which is controlled with cooling water.

The LCPD is allowed to react for 20 minutes and is then introduced into a cylinder equipped with an orifice having diameter of 0.5 mm and L/D of 0.5, and is spun into pyridine.

The spun fibre is wound with a winding speed of 30 m/min, and the fibre is washed with water and dried. The thus produced fibre has an I.V. of 4.3 and D/E/T/Mi of 5/11/19/450.

Example 11

Fibres are prepared in the same process as in Example 10 except that a number of conditions including the polymerisation solvent, L/D, SSF and polymerisation accelerating-precipitation solvent are changed in accordance with Table 7.

TABLE 7

| Exp. No. | Polymerisation Solvent | L/D | SSF | Precipitation Solvent | I.V. | D/E/T/Mi |
|---|---|---|---|---|---|---|
| 1 | NMP(250ml) | 0.5 | 2.0 | Py(300ml) | 4.3 | 3/13/21/473 |
| 2 | NMP(250ml) | 0.5 | 3.0 | Py(250ml)/NMP(50ml) | 4.8 | 10/15/17/350 |
| 3 | NMP(150ml)/DMAc(50ml) | 0.5 | 1.0 | Py(300ml)/$CaCl_2$ (1% by weight) | 5.1 | 2/12/20/470 |
| 4 | DMAc(50ml) | 0.5 | 1.0 | Py(200ml)/DMAc(100ml) | 4.9 | 4/10/19/410 |
| 5 | NMP(170ml)/HMPA(30ml) | 1.0 | 3.0 | Py(300ml) | 5.7 | 2/20/19/395 |
| 6 | NMP(100ml)/HMPA(100ml) | 1.0 | 3.0 | Py(250ml)/NMP(50ml) | 4.9 | 5/13/20/441 |
| 7 | DMAc(150ml) HMPA(50ml) | 1.0 | 2.0 | Py(300ml) | 5.2 | 7/18/16/400 |
| 8 | DMAc(50ml) HMPA(150ml) | 1.0 | 3.0 | Py(230ml)/HMPA (70ml) | 5.1 | 6/11/20/370 |

Comparative Example 1

The fibres are prepared by the same process as in Example 11 except that the resultant LCPD is spun into water.

The I.V. of resulting fibres were compared with those of fibres according to Example 11, and the results are shown in Table 8.

TABLE 8

| Exp. No. | I.V.-P | I.V.-W |
|---|---|---|
| 1 | 4.3 | 1.7 |
| 2 | 4.8 | 1.8 |
| 3 | 5.1 | 2.3 |
| 4 | 4.9 | 2.1 |
| 5 | 5.7 | 2.7 |
| 6 | 4.9 | 2.2 |
| 7 | 5.2 | 2.4 |
| 8 | 5.1 | 2.3 |

Example 12

After 2.16 g of PPD and 5.05 g of 3,4-diaminodiphenyl ether are dissolved in a solution of 5.4 g of $CaCl_2$ dissolved in 200 ml of NMP, 9.19 g of TPC is added and polymerised for 10 minutes, at a low temperature.

The resulting LCPD are spun into pyridine through an orifice with a diameter of 0.3 mm and L/D of, at a winding speed of 50 m/min and simultaneously washed with water and ried to obtain a fibre which has an I.V. of 5.6.

Example 13

After 5.4 g of $CaCl_2$ and 4.90 g of PPD are dissolved in a mixed solvent of 100 ml NMP and 100 ml HMPA, 9.19 g of TPC is added and cooled while stirring. After stirring for 30 minutes, the resulting LCPD is spun into a mixed solvent of pyridine/HMPA (80 parts by weight/20 parts by weight) through an orifice under the same conditions as in Example 12. The spun fibre is wound, washed with water and dried. The fibre has I.V. of 4.6 and T/E/Mi/Den of 7/10/400/3.

Example 14

This example uses the apparatus of figures 1 and 2 and makes pulp-like short fibres.

The reaction vessel 1 is purged with nitrogen gas and moisture in the vessel is removed. 250 ml of NMP is introduced into the vessel 1 and the temperature is increased to 80°C. After that, 10.0 g of $CaCl_2$ as metal halide is added and stirred for 30 min in order to dissolve it. 10.38 g of PPD is then added and dissolved while stirring for 10 min, and 19.55 g of TPC is also added and simultaneously stirred vigorously while maintaining a temperature of 30°C.

After stirring for 8 minutes, the resulting LCPD is transferred to the nozzle jet apparatus 7 through a transfer line 3 with a diameter of 3 mm by the operating gear pump 4. The diameter of each nozzle is 0.3 mm, there are 15 nozzles and the gear pump is operated at a pressure of 294 kPa (3 kg/cm).

Just after the above LCPD begins to be extruded into the nozzle jet, pyridine having a water content less than 1,000 ppm is forced from vessel 2 through transfer line 6 having 6 mm diameter into the nozzle jet by the operating transfer pump 5 which provides a pressure of 29.4 kPa (0.3 $kg/cm^2$).

In the nozzle jet 7, the LCPD come into contact with pyridine at 20°C and then they are simultaneously ejected by extrusion through an ejection tube 8 that is 6 mm in diameter and 4 m in length.

The resulting pulp-like particles and pyridine solvent are separated by filtration. The filtrate is recirculated, and the fibres are dried for 5 hours in a vacuum drier maintained at 110°C. The inherent viscosity of the pulp-like short fibre is 4.03.

Example 15

The process is the same as in Example 14, but the I.V. of the polymer of the LCPD (I.V.-D) is changed according to Table 9.

Table 9

| Exp.No. | I.V.-D | I.V.-P |
|---|---|---|
| 1 | 2.37 | 4.53 |
| 2 | 2.79 | 5.39 |
| 3 | 3.04 | 6.01 |
| 4 | 3.27 | 5.74 |
| 5 | 3.65 | 5.21 |
| 6 | 3.97 | 5.50 |

Example 16

The fibres are prepared by the same process as in Example 14 except that the transfer pressure is adjusted to 49 kPa (0.5 $kg/cm^2$) and I.V.-D and precipitation solvents are as shown in Table 10.

Table 10

| Exp. No. | Precipitation solvent | I.V.-D | I.V.-P |
|---|---|---|---|
| 1 | Py 90 parts/NMP 10 parts | 2.37 | 5.84 |
| 2 | Py 70 parts/NMP 30 parts | 2.63 | 5.31 |
| 3 | Py 50 parts/NMP 50 parts | 2.45 | 5.12 |
| 4 | Py 30 parts/NMP 70 parts/$CaCl_2$ 8% | 3.04 | 6.30 |
| 5 | Py 6 parts/NMP 94 parts | 3.71 | 4.80 |
| 6 | Py 50 parts/DMAc 50 parts | 2.46 | 5.31 |
| 7 | Py 70 parts/HMPA 30 parts | 2.95 | 5.59 |
| 8 | Py 50 parts/HMPA 50 parts | 3.43 | 6.13 |

Example 17

Pulp-like short fibres are prepared by the same process as in Example 14 except that a tertiary amine is used as shown in Table 11. I.V.-D is 2.71.

Table 11

| Exp.No. | Precipitation solvent | I.V.-P |
|---|---|---|
| 1 | triethylamine | 4.3 |
| 2 | t-butylamine | 5.47 |
| 3 | dimethylethylamine | 4.1 |

Example 18

The process of Example 14 is carried out but the extrusion speeds of the LCPD and pyridine, and I.V.-D, are changed as shown in Table 12. The diameter of the nozzle is 0.5 mm.

TABLE 12

| Exp. No. | Speed of LCPD (m/min) | Speed of pyridine (m/min) | I.V.-D | I.V.-P |
|---|---|---|---|---|
| 1 | 2 | 10 | 2.73 | 4.70 |
| 2 | 2 | 12 | 2.73 | 4.80 |
| 3 | 2 | 20 | 2.73 | 5.81 |
| 4 | 4 | 20 | 2.59 | 5.53 |
| 5 | 4 | 50 | 2.59 | 4.76 |
| 6 | 10 | 50 | 3.12 | 6.34 |
| 7 | 10 | 30 | 3.12 | 6.91 |
| 8 | 15 | 35 | 2.95 | 6.07 |
| 9 | 15 | 50 | 2.95 | 5.91 |
| 10 | 20 | 50 | 3.46 | 6.63 |
| 11 | 25 | 70 | 3.46 | 5.74 |
| 12 | 30 | 70 | 3.46 | 6.41 |
| 13 | 40 | 100 | 3.77 | 7.14 |
| 14 | 50 | 130 | 3.77 | 6.91 |

Example 19

The process of Example 14 is repeated except that the pressure of the gear pump is adjusted to 490 kPa (5 kg/cm$^2$) and the pressure of circulatory pump is adjusted to 68.7 kPa (0.7 kg/cm$^2$). The I.V. of the polymer of the LCPD, diameter and number of nozzles are changed as described in Table 13.

TABLE 13

| Exp. No. | Diameter of nozzle (mm) | Number of nozzles | I.V.-D | I.V.-P |
|---|---|---|---|---|
| 1 | 0.1 | 10 | 3.17 | 5.73 |
| 2 | 0.3 | 5 | 2.74 | 5.03 |
| 3 | 0.3 | 20 | 2.69 | 4.85 |
| 4 | 0.5 | 10 | 3.25 | 5.97 |
| 5 | 0.5 | 20 | 3.47 | 6.34 |
| 6 | 0.5 | 30 | 3.36 | 6.59 |
| 7 | 0.5 | 40 | 2.94 | 6.04 |
| 8 | 0.7 | 5 | 2.61 | 5.83 |
| 9 | 0.7 | 15 | 3.54 | 6.14 |
| 10 | 0.7 | 25 | 3.04 | 6.36 |
| 11 | 0.7 | 35 | 2.79 | 5.83 |
| 12 | 1.0 | 5 | 2.91 | 6.09 |
| 13 | 1.0 | 10 | 3.30 | 6.31 |
| 14 | 1.0 | 20 | 3.08 | 6.25 |

Example 20

In this example, the processes are carried out as in Example 14 except that the I.V. of the polymer of the LCPD and the length of ejection tube are altered as shown in Table 14. The diameter and number of nozzles are 0.5 mm and 15, the pressure applied to the LCPD is 490 kPa (5 kg/cm$^2$), and the pressure of pyridine is 68.7 kPa (0.7 kg/cm$^2$).

TABLE 14

| Exp. | Length (m) | I.V.-D | I.V.-P |
|---|---|---|---|
| 1 | 5 | 2.07 | 5.09 |
| 2 | 7 | 3.28 | 6.73 |
| 3 | 10 | 2.73 | 5.13 |
| 4 | 20 | 2.91 | 6.27 |
| 5 | 30 | 3.15 | 6.47 |
| 6 | 40 | 2.36 | 6.43 |
| 7 | 50 | 2.38 | 6.27 |

Example 21

Processes are carried out under the same conditions as in Example 14, except that different precipitation solvents are used, as shown in Table 15. When the solvent is a mixture of NMP and HMPA, 10.0 g of $CaCl_2$ is used. When the solvent is DMAc alone or a mixture of DMAc and HMPA, 10.0 g of LiCl is used. The nozzles and the pressures of the LCPD and pyridine are the same as in Example 20.

TABLE 15

| Exp. No. | Polymerisation solvent | I.V.-D | I.V.-P |
|---|---|---|---|
| 1 | NMP(175ml) + HMPA(75ml) | 2.14 | 5.41 |
| 2 | NMP(125ml) + HMPA(125ml) | 1.96 | 4.97 |
| 3 | DMAc(250ml) | 2.21 | 5.58 |
| 4 | DMAc(175ml) + HMPA(75ml) | 2.18 | 4.01 |
| 5 | DMAc(125ml) + HMPA(125ml) | 2.09 | 4.78 |

Example 22

The process is carried out under the same conditions as in Example 14, except that the monomers are replaced according to Table 16. When using 3,4'-diaminodiphenyl ether as a monomer, the monomers are preferably 25 mole percent p-phenylenediamine, 50 mole percent terephthaloyl chloride, and 25 mole percent of 3,4'-diaminodiphenyl ether. The diameter and number of nozzles are 0.7 mm and 15, and the pressures of the LCPD and pyridine are 392 kPa (4 kg/cm$^2$) and 49 kPa (0.5 kg/cm$^2$).

TABLE 16

| Exp. No. | Monomer | I.V.-D | I.V.-P |
|---|---|---|---|
| 1 | chloro-p-phenylene diamine/terephthaloyl chloride (TPC) | 1.93 | 4.46 |
| 2 | 4,4'-diaminodiphenylmethane/TPC | 2.19 | 4.89 |
| 3 | PPF/2,6-naphthalene dicarboxylic acid chloride | 1.86 | 4.83 |
| 4 | 4,4'-diaminodiphenyl sulfone/TPC | 2.04 | 5.03 |
| 5 | PPD/3,4'-diaminodiphenyl ether | 1.97 | 4.68 |

Example 23

The processes are carried out under as the same conditions as in Example 14, except that amide polymerisation solvent contains some tertiary amine (Pyridine) as shown in Table 17.

TABLE 17

| Exp. No. | Polymerisation solvent | Inorganic salt | I.V.-D | I.V.-P |
|---|---|---|---|---|
| 1 | NMP/Py 0.5% | $CaCl_2$ | 2.24 | 5.73 |
| 2 | NMP/Py 1% | $CaCl_2$ | 2.36 | 5.79 |
| 3 | NMP/Py 2% | $CaCl_2$ | 2.51 | 6.02 |
| 4 | NMP/Py 2.5% | $CaCl_2$ | 2.53 | 6.24 |
| 5 | DMAc/Py 2% | LiCl | 2.37 | 5.93 |
| 6 | DMAc/Py 1% | LiCl | 2.43 | 5.94 |
| 7 | DMAc/Py 2% | LiCl | 2.49 | 6.03 |
| 8 | NMP 70%/HMPA 30%/Py 1% | $CaCl_2$ | 2.35 | 5.84 |

Comparative Example 2

In this comparative example, water is used instead of polymerisation accelerating-precipitation solvent, as in the prior art.

The inherent viscosity of the prepolymer in the dope (I.V.-D) and of the final polymer in the water (I.V.-W) are in Table 18.

TABLE 18

| I.V.-D | I.V.-W |
|---|---|
| 2.1 | 2.13 |
| 2.37 | 2.29 |
| 3.04 | 3.16 |
| 3.65 | 3.83 |
| 3.97 | 3.95 |

Example 24 and Comparative Example 3

This example uses the apparatus of Example 3. Preparation of the LCPD is according to the process of Example 14 but using 240 ml of NMP, 7.2 g of $CaCl_2$, 6.53 g of PPD and 12.26 g of TPC. The resultant LCPD is transferred into dope storage, maintained at a low temperature by cooling water, and ejected through 3 mm stainless steel tube into pyridine at 0° C and 294 kPa (3 kg/cm$^2$) nitrogen pressure, while stirring. The impeller has a diameter of 6.5 cm, a width of 1.2 cm and revolves at a rate of 1,500 rev/min. The distance between the impeller and the end of ejection tube is approximately 1.0 mm.

In order to examine the effect of pyridine, the LCPD is also ejected into both water and a 6% NaHCO aqueous solution.

After that, the resultant polymers are washed with water and dried under vacuum, at 110° C for 6 hours.

The resultant polymers have I.V.s as listed in Table 19.

TABLE 19

| Precipitation Solvent | I.V. |
|---|---|
| Water | 2.36 |
| 6% NaHCO | 2.37 |
| Pyridine | 5.62 |

Example 25 and Comparative Example 4

In this example, the same process as in Example 24 is carried out, but the polymerisation time after adding TPC, and size and shape of the ejection tube, the stir rate during extrusion, and the polymerisation accelerating-precipitation solvent are changed as shown in Table 20.

Simultaneously, another process using water as the precipitation solvent is carried out.

The measured I.V.s of the resultant pulp-like short fibres are listed in Table 20.

TABLE 20

| Exp. No. | Polymerisation time(min) | Number and Size of orifices | Stir rate (rev/min) | Precipitation solvent | I.V. |
|---|---|---|---|---|---|
| 1 | 15 | 1x3 mm | 1500 | Water<br>Pyridine | 1.90<br>4.33 |
| 2 | 17 | 1x3 mn | 3000 | Water<br>Pyridine | 3.20<br>5.81 |
| 3 | 10 | 1x3 mm | 1750 | Water<br>Pyridine | 1.95<br>5.58 |
| 4 | 13 | 3x0.1 mn | 3000 | Water<br>Py/$CaCl_2$ 7% | 1.85<br>6.48 |
| 5 | 13 | 3x0.1 mm | 3000 | Water<br>Pyridine | 2.29<br>7.10 |
| 6 | 12 | 3.0.1 mm | 3000 | Water<br>Pyridine | 3.43<br>6.01 |

Example 26 and Comparative Example 5

The pulp-like short fibre is prepared by the same process as in Example 24 except that polymerisation time, stir rate, and polymerisation accelerating-percipitation solvent are replaced as shown in Table 21.

The mixture of tertiary amine and pyridine is used as the polymerisation accelerating precipitation solvent. As a Comparative example, water is also used as precipitation solvent, in place of the above mixture.

TABLE 21

| Exp. No. | Polymerisation time (min) | Stir rate (rev/min) | Precipitation solvent | I.V. |
|---|---|---|---|---|
| 1 | 15 | 3000 | NMP/Py(1/5)<br>Water | 5.64<br>1.90 |
| 2 | 7 | 3000 | NMP/Py(113)<br>Water | 4.96<br>2.37 |
| 3 | 13.5 | 3000 | NMP/Py(1/1)<br>Water | 5.04<br>2.25 |
| 4 | 12 | 3000 | NMP/Py(2/1)<br>Water | 8.56<br>2.43 |

Example 27 and Comparative Example 6

A process having the same reaction conditions as in Example 24 is carried out, but using DMAc as amide solvent, and LiCl instead of $CaCl_2$. The polymerisation time after adding TPC, and the diameter and shape of the ejection tube are changed as shown in Table 22.

The I.V. when water or ethanol is used as the precipitation solvent is shown as a comparison. The stir rate was 3,000 rev/min. A single orifice was used, having the diameter shown.

TABLE 22

| Exp. No. | Polymerisation time (min) | Diameter | Precipitation Solvent | I.V. |
|---|---|---|---|---|
| 1 | 8 | 3 mm | Water<br>Pyridine | 2.23<br>4.65 |
| 2 | 16 | 3 mm | Water<br>Pyridine<br>DMAc/Py(1/3) | 2.53<br>4.92<br>6.01 |
| 3 | 13 | 1.5 mm | Water<br>Pyridine<br>DMAc/Py(1/3)<br>Acetone/Py(1/5)<br>Ethanol | 2.40<br>5.72<br>3.65<br>3.33<br>2.45 |

Example 28

The conditions of this example are the same as in Example 24 except that the composition of the polymerisation solvent and the inorganic salt are changed as described in Table 23.

TABLE 23

| Exp No. | Polymerisation solvent | Inorganic salt | I.V.-D | I.V.-P |
|---|---|---|---|---|
| 1 | NMP/Py 1% | $CaCl_2$ | 2.45 | 6.21 |
| 2 | NMP/triethylamine 0.5% | $CaCl_2$ | 2.39 | 5.94 |
| 3 | DMAc/triethylamine 1% | LiCl | 2.41 | 5.91 |
| 4 | NMP(70%)/HMPA (30%)/Py 0.5% | $CaCl_2$ | 2.33 | 5.83 |

Example 29

This example uses the apparatus of Figure 4. The LCPD is prepared by the same process as in Example 14, and transferred to the mixer. Simultaneously the LCPD and the pyridine from the storage cylinder are transferred to the ejector.

After that, the LCPD and pyridine are ejected at the same time. The temperature is -6 °C, the diameter and length of the ejection orifice are 0.3 mm and 3 m, and the ejection speed of the LCPD is 1 m/min, while the ejection speed of pyridine is 30 m/min. The resultant pulp-like short fibre had an I.V. of 6.5.

Example 30

Pulp-like short fibre is prepared under the same reaction conditions as in Example 29 except that the conditions are as described in Table 24.

TABLE 24

| Exp. No. | Polymerisation solvent | Inorganic salt | Precipitation solvent | I.V.-D | I.V.-P |
|---|---|---|---|---|---|
| 1 | NMP | $CaCl_2$ | Pyridine | 2.1 | 4.9 |
| 2 | NMP | LiCl | Pyridine | 2.35 | 6.52 |
| 3 | NMP | $CaCl_2$ | Py/$CaCl_2$ 5% | 2.35 | 6.52 |
| 4 | DMAc | LiCl | Pyridine | 2.21 | 5.87 |
| 5 | DMAc | $CaCl_2$ | Pyridine | 2.48 | 7.68 |
| 6 | DMAc | LiCl | Py/Acetone | 2.39 | 4.01 |

Example 31

The conditions of this example are the same as in Example 29 with the exception of the I.V. of the polymer of the LCPD and the ejection speed (m/min) which are changed as shown in Table 25.

TABLE 25

| Exp. No. | Ejection Speed (m/min) | I.V.-D | I.V.-P |
|---|---|---|---|
| 1 | 10 | 2.18 | 4.53 |
| 2 | 20 | 2.53 | 4.81 |
| 3 | 50 | 2.41 | 5.84 |
| 4 | 100 | 2.05 | 6.40 |
| 5 | 500 | 2.23 | 5.90 |
| 6 | 1000 | 2.30 | 7.7 |

Example 32

Pulp-like short fibre is prepared under the same conditions as in Example 29. I.V.s of the polymer of the LCPD and the resultant pulp-like short fibres are measured as the content of the fibre (weight) to polymerisation solvent (volume) in changed according to Table 26.

TABLE 26

| Exp. No. | Content (%) | I.V.-D | I.V.-P |
|---|---|---|---|
| 1 | 4.5 | 1.90 | 5.61 |
| 2 | 6 | 2.34 | 5.81 |
| 3 | 8 | 2.15 | 6.04 |
| 4 | 10 | 2.41 | 5.73 |
| 5 | 12 | 2.05 | 6.41 |
| 6 | 14 | 2.23 | 7.00 |

Comparative Example 7

In this comparative example, pulp-like short fibre is prepared under the same conditions as in Example 29 except that the precipitation solvent is changed as shown in Table 27.

TABLE 27

| Exp. No. | Precipitation Solvent | I.V.-D | I.V.-P |
|---|---|---|---|
| 1 | $H_2O$ | 1.85 | 2.45 |
| 2 | NMP/$H_2O$ (1:1) | 2.07 | 2.58 |
| 3 | Methyl alcohol | 2.14 | 2.77 |

## Claims

1. A process for preparing aromatic polyamide in the form of fibre and film which comprises polycondensing difunctional aromatic amine and acid chloride while dissolved in a first solvent comprising a solution in an amide or DMSO of an inorganic salt and thereby forming a liquid crystalline prepolymer dope having an inherent viscosity of form 1.0 to 4.0, extruding the dope as fibre or film product into or with a precipitating solvent comprising a polymerisation accelerator which comprises a tertiary amine that will complete the polymerisation of the prepolymer, and stretching the extruded product while completing the polymerisation.

2. A process according to claim 1 in which the first solvent includes up to 2% tertiary amine.

3. A process according to claim 1 or claim 2 wherein the prepolymer in the dope contains repeating units of the following formula (I) or (II)

$$- CO - R_1 - CO - NH - R_2 - NH - \quad (I)$$

$$- CO - R_3 - NH - \quad (II)$$

wherein $R_1$ and $R_2$ are the same or different and $R_1$, $R_2$ and $R_3$ are selected from (X is H, Cl, Br or I)

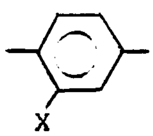
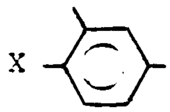
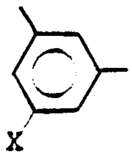
,

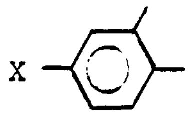
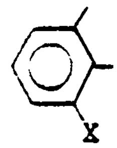

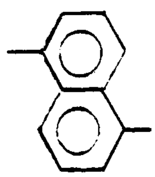
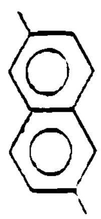
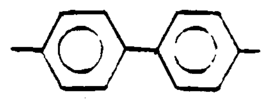
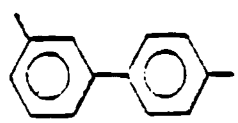

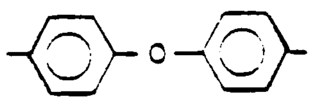
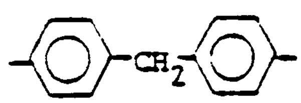
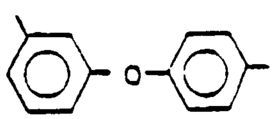

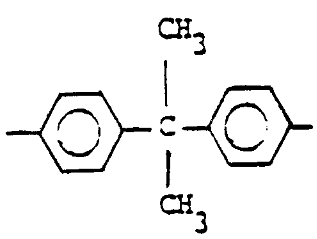
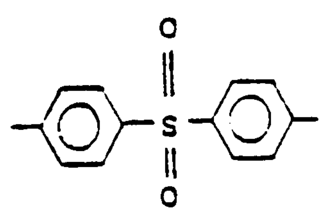

4. A process according to any preceding claim wherein the polymer content of the dope is between about 4.0 and 20% by weight, preferably about 5 and 15% by weight.

**5.** A process according to any preceding claim wherein the or each tertiary amine comprises pyridine, quinoline, triethylamine, t-butylamine, picoline, pyrimidine, pyrazine, or quinoxaline, preferably pyridine.

**6.** A process according to any preceding claim wherein the first solvent comprises an amide, preferably at least one of N-methyl-2-pyrrolidone, N,N-dimethylacetamide, hexamethylphosphoramide, N,N-dimethylformamide, tetramethylurea, N-methylpiperidone, N-methylcaprolactam, N-acetylpyrrolidine, N-ethylpyrrolidone, dimethylpropionamide, dimethylisobutyramide and dimethylpropylurea.

**7.** A process according to any preceding claim wherein the first solvent includes inorganic salt in an amount of 0.5 to 15% by weight.

**8.** A process according to claim 7, wherein the inorganic salt is at least one of $CaCl_2$, KCl, LiCl, KBr and LiBr, preferably $CaCl_2$.

**9.** A process according to any preceding claim wherein the precipitation solvent comprises 10 to 100% tertiary amine, up to 90% amide or DMSO and up to 10% inorganic salt, the percentages being by volume.

**10.** A process according to any preceding claim wherein the inherent viscosity of the prepolymer of the dope is from 1.5 to 3.5.

**11.** A process according to any preceding claim wherein the temperature during the extrusion of the dope is -40 ° C to 50 ° C, preferably -10 ° C to 40 ° C.

**12.** A process according to any preceding claim in which the dope is continuously extruded into the precipitating solvent and is wound at a spin-stretch factor of 1 to 4 as a filament or film.

**13.** A process according to any of claims 1 to 11 in which the dope is extruded with or into the precipitation solvent with a shear rate of at least 20 $s^{-1}$ and is converted to short fibres.

**14.** A process according to claim 13 wherein the ejection speed of the dope is higher than 5 m/min.

**15.** A process according to claim 13 wherein the dope is ejected into the precipitation solvent while stirring sufficiently to give a shear rate of at least 20 $s^{-1}$.

**16.** The process according to claim 13 wherein a stream of the dope joins a stream of precipitation solvent at a 20 ° to 80 ° contact angle and the combined stream is ejected.

**17.** A process according to any preceding claim in which the dope is extruded while it is opalescent on stirring and just before gelation, and when it is optically anisotropic.

**18.** A process according to any preceding claim in which the prepolymer in the dope is a copolymer or a homopolymer.

**19.** A fibre of aromatic polyamide prepared according to the process of any of claims 1 to 18.

**20.** A textile manufactured from the aromatic polyamide fibre of claim 19.

**21.** A reinforcing resin containing, as fibrous reinforcement, fibres of claim 19.

**22.** Use of the aromatic polyamide fibre of claim 19 in the manufacture of textiles.

**23.** Use of the fibre of claim 19 as fibrous reinforcement in a reinforcing resin.

## Revendications

1. Un procédé de préparation d'un polyamide aromatique sous la forme de fibre et de film qui comprend la polycondensation d'une amine aromatique difonctionnelle et d'un chlorure d'acide à l'état dissous dans un premier solvant comprenant une solution dans un amide ou dans du DMSO d'un sel inorganique pour former une dope de prépolymère cristallin liquide ayant une viscosité inhérente de 1,0 à 4,0, l'extrusion de la dope sous la forme d'une fibre ou d'un film dans ou avec un solvant de précipitation comprenant un accélérateur de polymérisation qui comprend une amine tertiaire qui complète la polymérisation du prépolymère, et l'étirage du produit extrudé en complétant la polymérisation.

2. Un procédé selon la revendication 1, selon lequel le premier solvant inclut jusqu'à 2 % d'amine tertiaire.

3. Un procédé selon la revendication 1 ou la revendication 2, selon lequel le prépolymère dans la dope contient des unités de récurrence de formule (I) ou (II) suivantes :

   $- CO - R_1 - CO - NH - R_2 - NH -$ (I)

   $- CO - R_3 - NH -$ (II)

   dans lesquelles $R_1$ et $R_2$ sont identiques ou différents et $R_1$, $R_2$ et $R_3$ sont choisis parmi les suivants (X

est H, Cl, Br ou I)

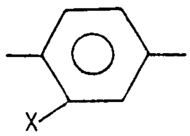
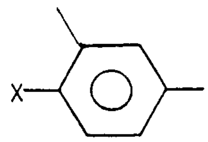
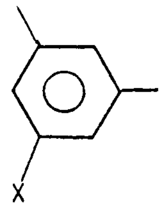

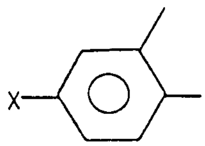
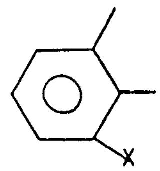

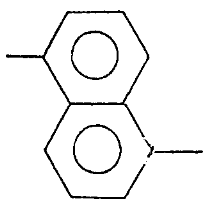
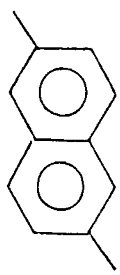
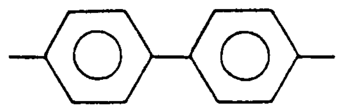
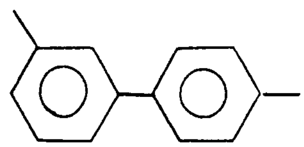

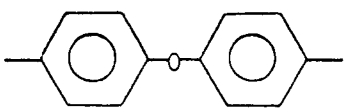
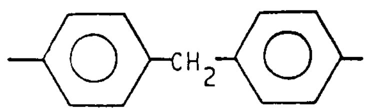
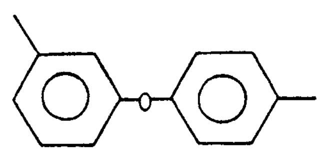

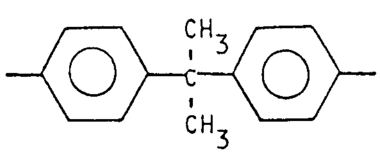
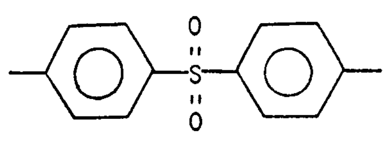

**4.** Un procédé selon l'une quelconque des revendications précédentes, selon lequel la teneur en polymère de la dope est comprise entre environ 4,0 et 20 % en poids, de préférence entre environ 5 et 15 % en poids.

**5.** Un procédé selon l'une quelconque des revendications précédentes, selon lequel la ou chaque amine tertiaire comprend l'une des suivantes : pyridine, quinoléine, triéthylamine, t-butylamine, picoline, pyrimidine, pyrazine ou quinoxaline, de préférence la pyridine.

6. Un procédé selon l'une quelconque des revendications précédentes, selon lequel le premier solvant comprend un amide, de préférence au moins l'un des suivants : N-méthyl-2-pyrrolidone, N,N-diméthylacétamide, hexaméthylphosphoramide, N,N-diméthylformamide, tétraméthylurée, N-méthylpipéridone, N-méthylcaprolactame, N-acétylpyrrolidine, N-éthylpyrrolidone, diméthylpropionamide, diméthylisobutyramide et diméthylpropylurée.

7. Un procédé selon l'une quelconque des revendications précédentes, selon lequel le premier solvant inclut un sel inorganique en quantité de 0,5 à 15 % en poids.

8. Un procédé selon la revendication 7, selon lequel le sel inorganique est au moins l'un des suivants : $CaCl_2$, KCl, LiCl, KBr et LiBr, préférablement $CaCl_2$.

9. Un procédé selon l'une quelconque des revendications précédentes, selon lequel le solvant de précipitation comprend 10 à 100 % d'amine tertiaire, jusqu'à 90 % d'amide ou de DMSO et jusqu'à 10 % de sel inorganique, les pourcentages étant comptés en volume.

10. Un procédé selon l'une quelconque des revendications précédentes, selon lequel la viscosité inhérente du prépolymère de la dope est de 1,5 à 3,5.

11. Un procédé selon l'une quelconque des revendications précédentes, selon lequel la température durant l'extrusion de la dope est de -40 °C à 50 °C, de préférence de -10 °C à 40 °C.

12. Un procédé selon l'une quelconque des revendications précédentes, selon lequel la dope est extrudée en continu dans le solvant de précipitation et est enroulée à un facteur d'étirage-filage de 1 à 4 sous la forme d'un filament ou d'un film.

13. Un procédé selon l'une quelconque des revendications 1 à 11, selon lequel la dope est extrudée avec ou dans le solvant de précipitation avec un taux de cisaillement d'au moins 20 $s^{-1}$ et est convertie en fibres courtes.

14. Un procédé selon la revendication 13, selon lequel la vitesse d'éjection de la dope est supérieure à 5 m/min.

15. Un procédé selon la revendication 13, selon lequel la dope est éjectée dans le solvant de précipitation sous une agitation suffisante pour donner un taux de cisaillement d'au moins 20 $s^{-1}$.

16. Le procédé selon la revendication 13, selon lequel un courant de la dope rejoint un courant de solvant de précipitation selon un angle de contact de 20° à 80° et le courant combiné est éjecté.

17. Un procédé selon l'une quelconque des revendications précédentes, selon lequel la dope est extrudée pendant qu'elle est opalescente sous agitation et juste avant la gélification, et ensuite elle est optiquement anisotrope.

18. Un procédé selon l'une quelconque des revendications précédentes, selon lequel le prépolymère dans la dope est un copolymère ou un homopolymère.

19. Une fibre de polyamide aromatique préparée selon le procédé de l'une quelconque des revendications 1 à 18.

20. Un textile fabriqué à partir de la fibre de polyamide aromatique selon la revendication 19.

21. Une résine de renforcement contenant, comme renforcement fibreux, les fibres selon la revendication 19.

22. Utilisation de la fibre de polyamide aromatique selon la revendication 19 dans la fabrication des textiles.

23. Utilisation de la fibre de la revendication 19 comme renforcement fibreux dans une résine de renforcement.

## Patentansprüche

1. Verfahren zur Herstellung eines aromatischen Polyamids in Faser- und Folienform, welches ein Polykondensieren eines difunktionellen aromatischen Amins und eines Säurechlorids, gelöst in einem ersten Lösungsmittel, das eine Lösung eines anorganischen Salzes in einem Amid oder in DMSO umfaßt, unter Ausbildung einer flüssig-kristallinen Präpolymerlösung mit einer inneren Viskosität von 1,0 bis 4,0, ein Extrudieren der Lösung als Faser- oder Folienprodukt in ein oder mit einem Fällungslösungsmittel mit einem Gehalt an einem Polymerisationsbeschleuniger, der ein tertiäres Amin umfaßt, das die Polymerisation des Präpolymers vervollständigt, und ein Strecken des extrudierten Produktes unter Vervollständigung der Polymerisation umfaßt.

2. Verfahren nach Anspruch 1, worin das erste Lösungsmittel bis zu 2 % tertiäres Amin einschließt.

3. Verfahren nach Anspurch 1 oder 2, worin das Präpolymer in der Lösung wiederkehrende Einheiten der nachstehenden Formel (I) oder (II) enthält:

$$- CO - R_1 - CO - NH - R_2 - NH - \quad (I)$$

$$- CO - R_3 - NH - \quad (II),$$

worin $R_1$ und $R_2$ gleich oder verschieden sind und $R_1$, $R_2$ und $R_3$ unter

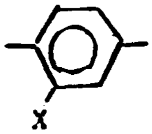 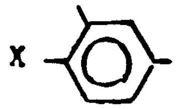 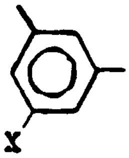

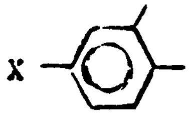 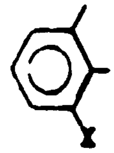

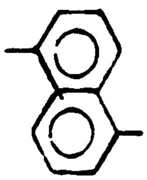 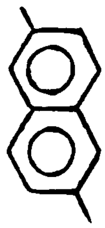 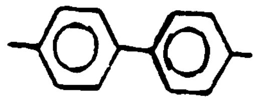 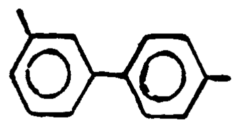

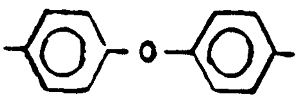 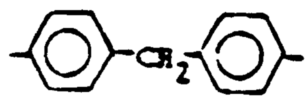 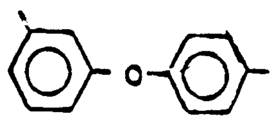

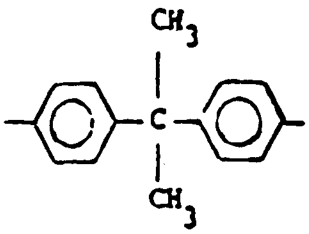 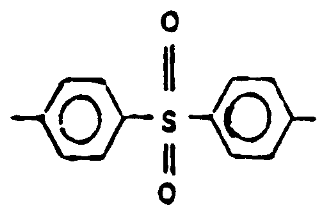

ausgewählt sind, wobei X für H, Cl, Br oder I steht.

**4.** Verfahren nach einem der vorstehenden Ansprüche, worin der Polymergehalt der Lösung zwischen etwa 4,0 und 20 Gew.-%, vorzugsweise 5 und 15 Gew.-% beträgt.

**5.** Verfahren nach einem der vorstehenden Ansprüche, worin das oder jedes tertiäres Amin Pyridin, Chinolin, Triethylamin, t-Butylamin, Picolin, Pyrimidin, Pyrazin oder Chinoxalin ist, vorzugsweise Pyridin ist.

6. Verfahren nach einem der vorstehenden Ansprüche, worin das erste Lösungsmittel ein Amid umfaßt, vorzugsweise wenigstens eines von N-Methyl-2-pyrrolidon, N,N-Dimethylacetamid, Hexamethylphosphoramid, N,N-Dimethylformamid, Tetramethylharnstoff, N-Methylpiperidon, N-Methylcaprolactam, N-Acetylpyrrolidin, N-Ethylpyrrolidon, Dimethylpropionamid, Dimethylisobutyramid und Dimethylpropylharnstoff.

7. Verfahren nach einem der vorstehenden Ansprüche, worin das erste Lösungsmittel anorganisches Salz in einer Menge von 0,5 bis 15 Gew.-% enthält.

8. Verfahren nach Anspruch 7, worin das anorganische Salz wenigstens eines von $CaCl_2$, KCl, LiCl, KBr und LiBr, vorzugsweise $CaCl_2$ ist.

9. Verfahren nach einem der vorstehenden Ansprüche, worin das Fällungslösungsmittel 10 bis 100% tertiäres Amin, bis zu 90% Amid oder DMSO und bis zu 10% anorganisches Salz umfaßt, wobei die Prozentsätze auf das Volumen bezogen sind.

10. Verfahren nach einem der vorstehenden Ansprüche, worin die innere Viskosität des Präpolymers der Lösung 1,5 bis 3,5 beträgt.

11. Verfahren nach einem der vorstehenden Ansprüche, worin die Temperatur während der Extrusion der Lösung -40 ° C bis 50 ° C, vorzugsweise -10 ° C bis 40 ° C beträgt.

12. Verfahren nach einem der vorstehenden Ansprüche, worin die Lösung kontinuierlich in das Fällungslösungsmittel extrudiert wird und mit einem Spinn-Streck-Faktor von 1 bis 4 als Faden oder Folie aufgewickelt wird.

13. Verfahren nach einem der Ansprüche 1 bis 11, worin die Lösung mit dem oder in das Fällungslösungsmittel mit einem Schergefälle von wenigstens 20 $s^{-1}$ extrudiert und in kurze Fasern umgewandelt wird.

14. Verfahren nach Anspruch 13, worin die Extrusionsgeschwindigkeit der Lösung über 5 m/min beträgt.

15. Verfahren nach Anspruch 13, worin die Lösung in das Fällungslösungsmittel unter ausreichendem Rühren extrudiert wird, um ein Schergefälle von wenigstens 20 $s^{-1}$ zu ergeben.

16. Verfahren nach Anspruch 13, worin ein Strom der Lösung unter einem Kontaktwinkel von 20 bis 80 ° mit einem Strom von Fällungslösungsmittel vereinigt wird und der vereinigte Strom extrudiert wird.

17. Verfahren nach einem der vorstehenden Ansprüche, worin die Lösung extrudiert wird, während sie beim Rühren und gerade vor dem Gelieren opaleszierend ist und wenn sie optisch anisotrop ist.

18. Verfahren nach einem der vorstehenden Ansprüche, worin das Präpolymer in der Lösung ein Copolymer oder ein Homopolymer ist.

19. Faser aus aromatischem Polyamid, hergestellt nach dem Verfahren gemäß einem der Ansprüche 1 bis 18.

20. Textilartikel, hergestellt aus der aromatischen Polyamidfaser nach Anspruch 19.

21. Verstärkungsharz mit einem Gehalt an Fasern nach Anspruch 19 als Faserverstärkung.

22. Verwendung der aromatischen Polyamidfaser nach Anspruch 19 in der Herstellung von Textilien.

23. Verwendung der Faser nach Anspruch 19 als Faserverstärkung in einem Verstärkungsharz.

FIG.1

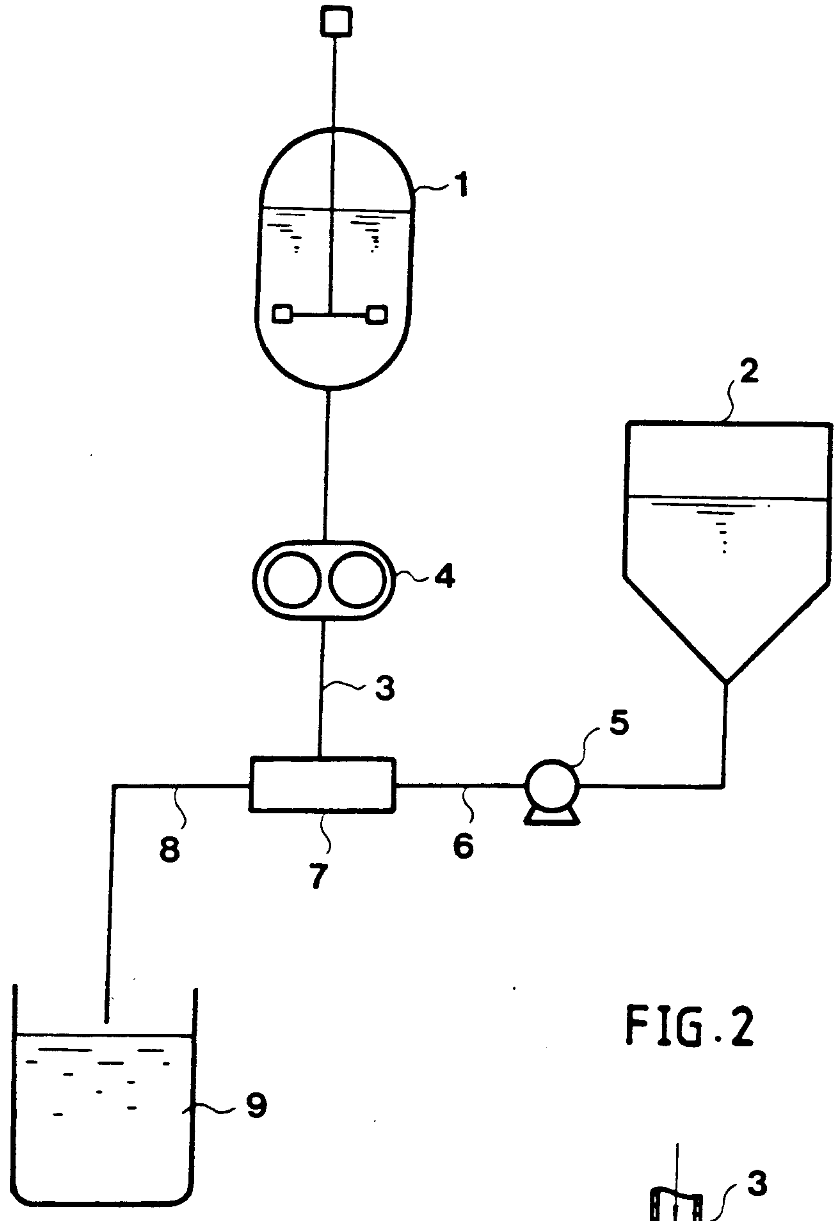


FIG.2

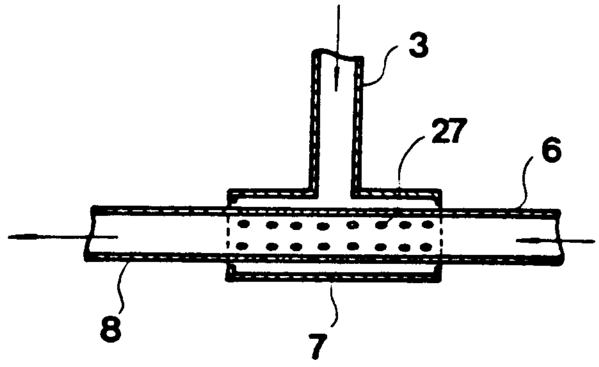

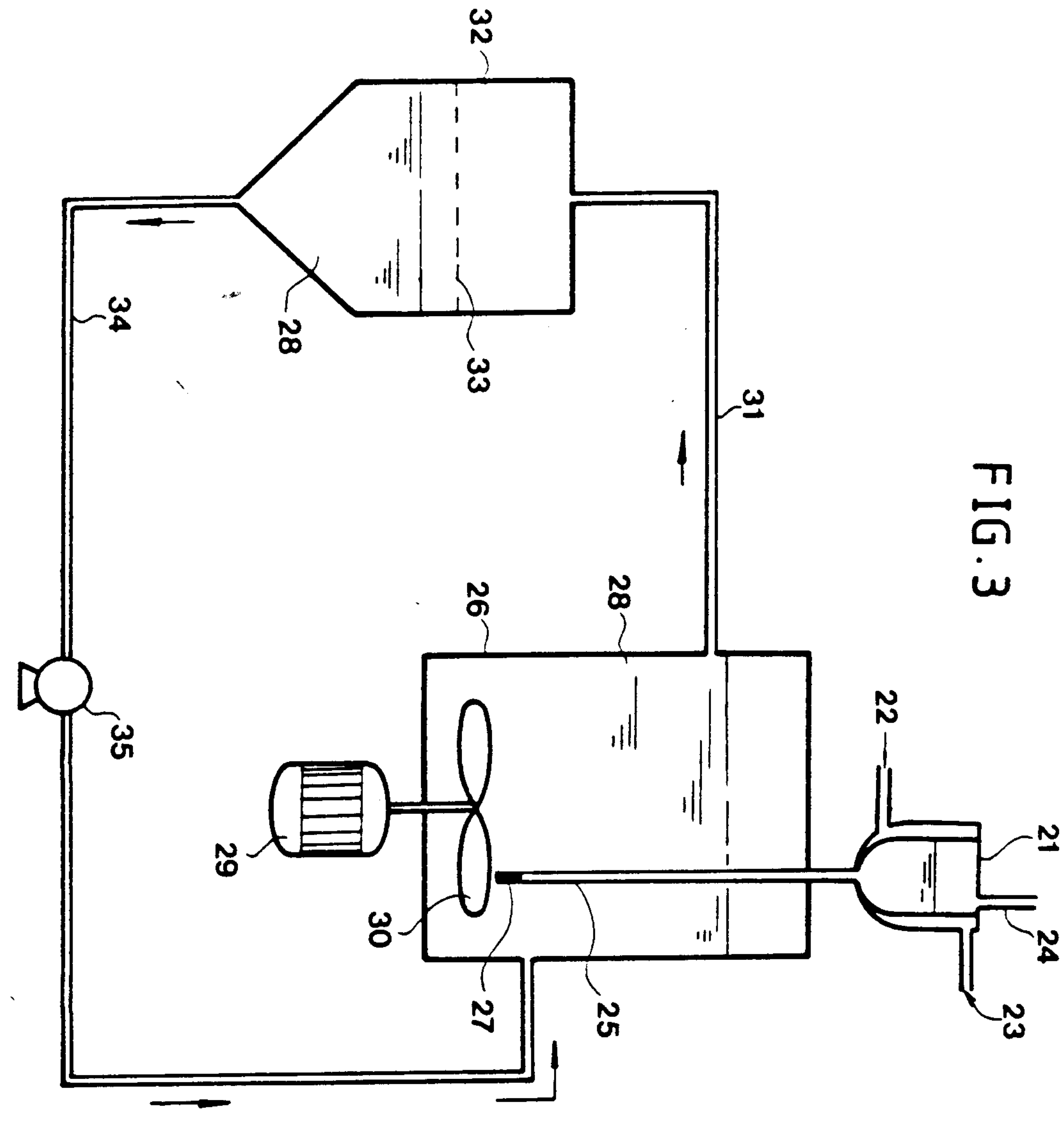


FIG.3

FIG.4

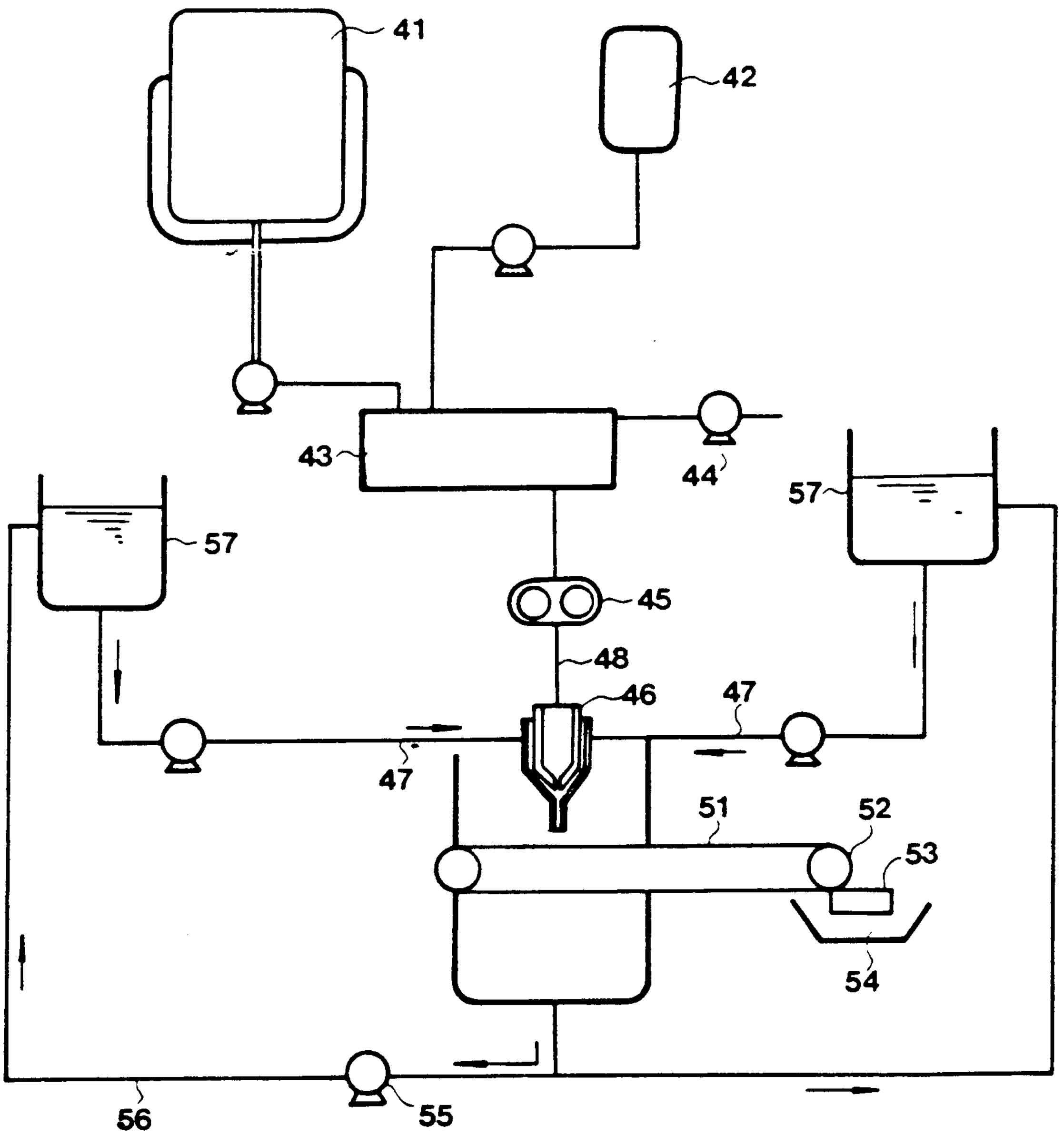

FIG.5

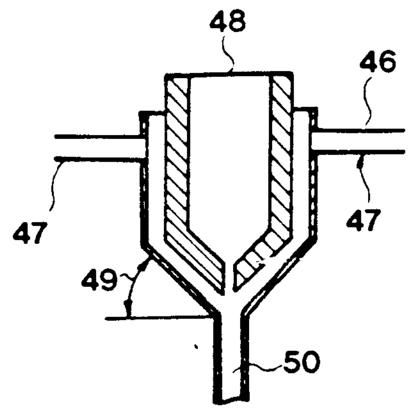


FIG.6

(a)

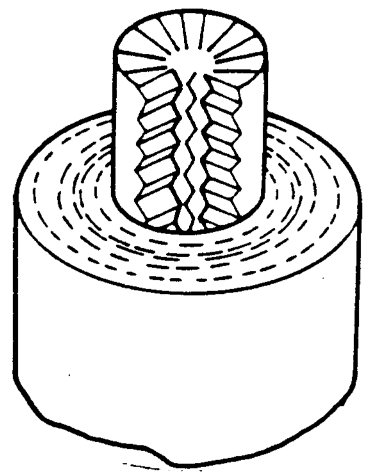

(b)

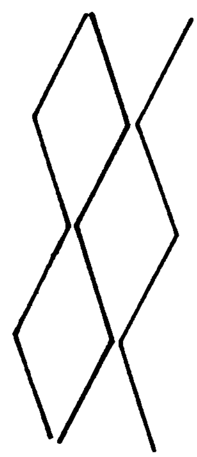

FIG.7

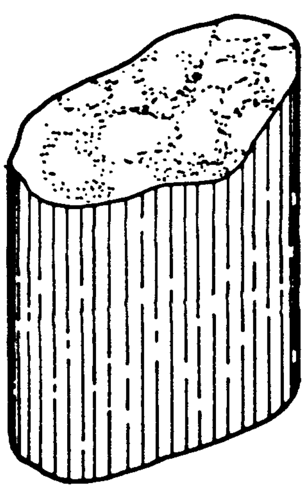

FIG.8

(a)

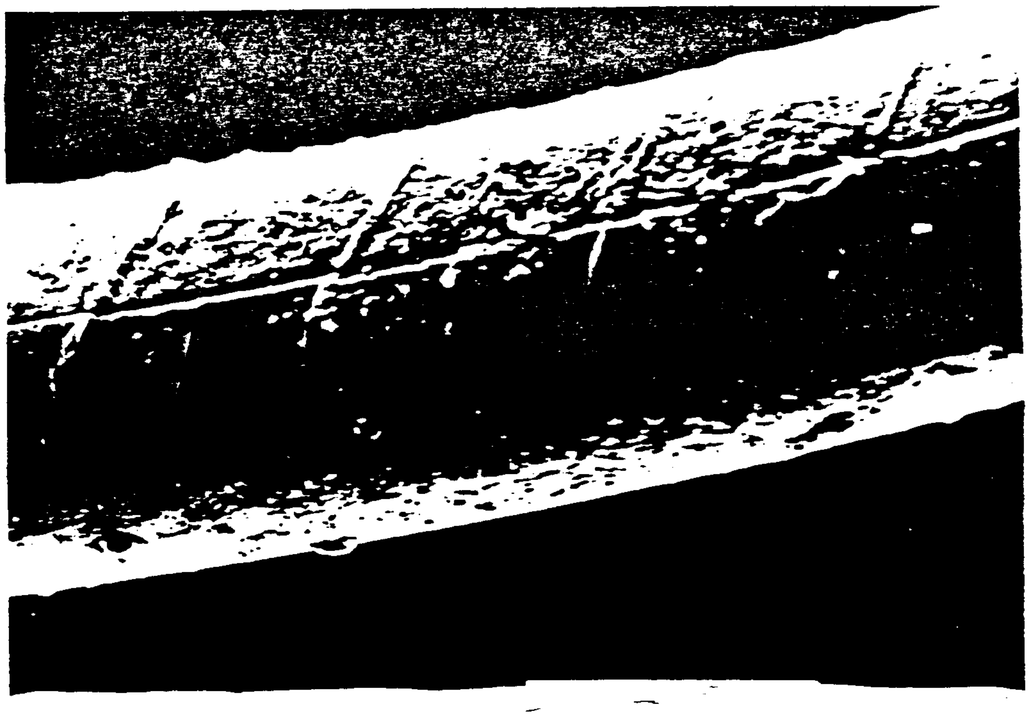

(b)

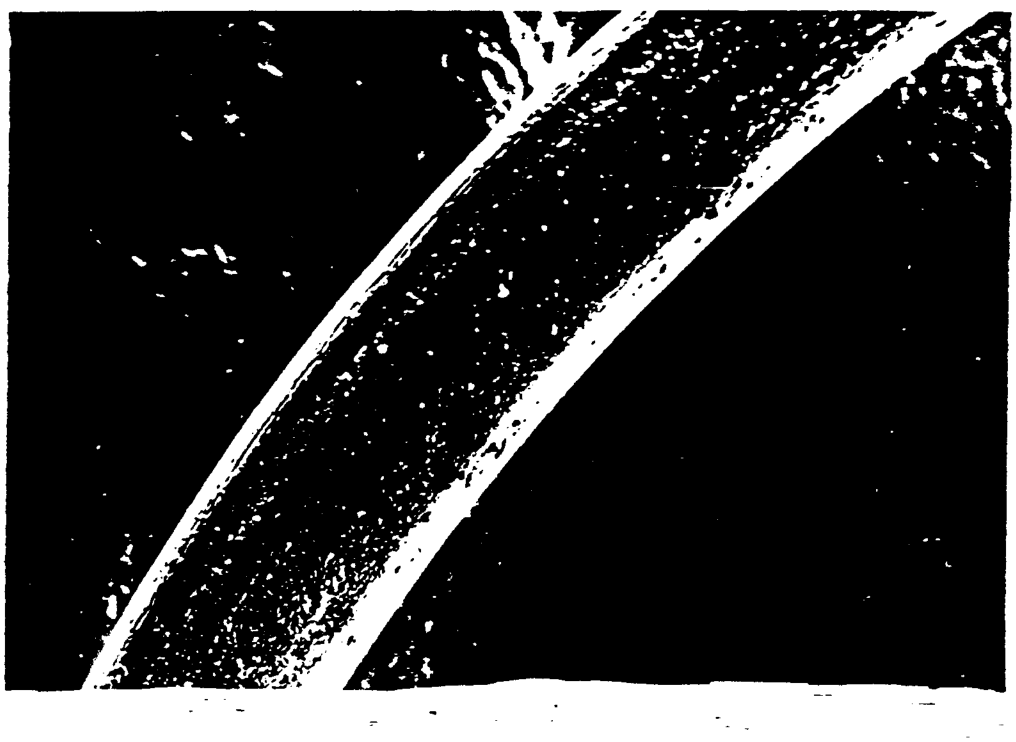

FIG. 9

(a)

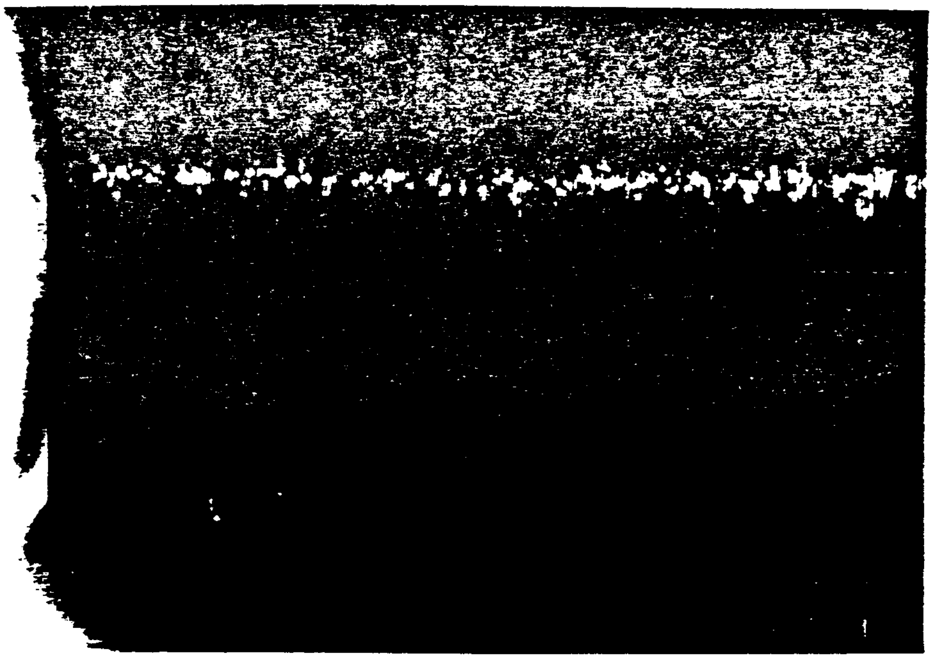

(b)

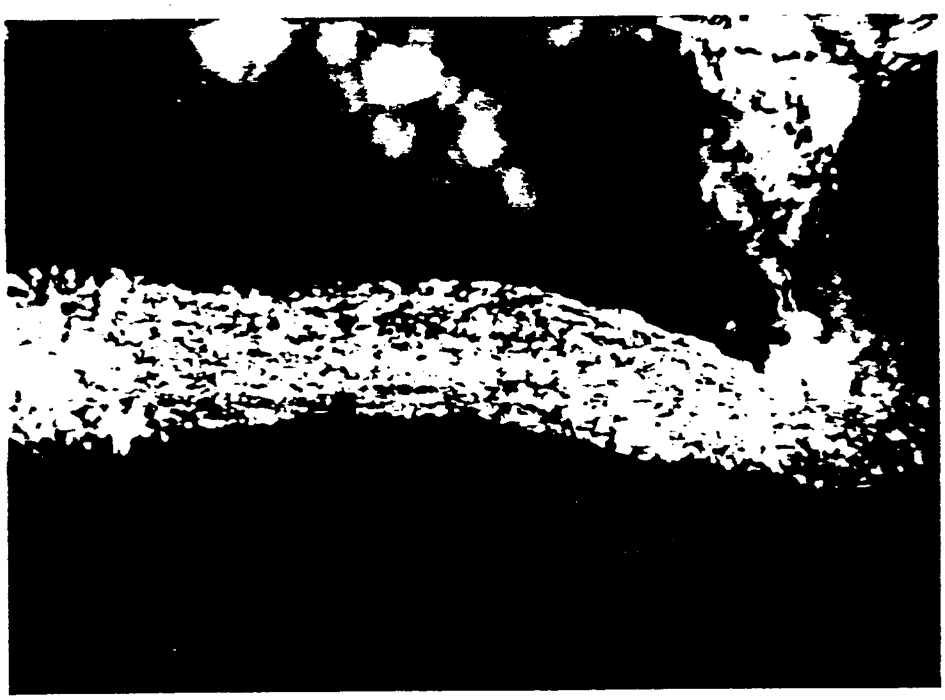

F I G. 10

(a)

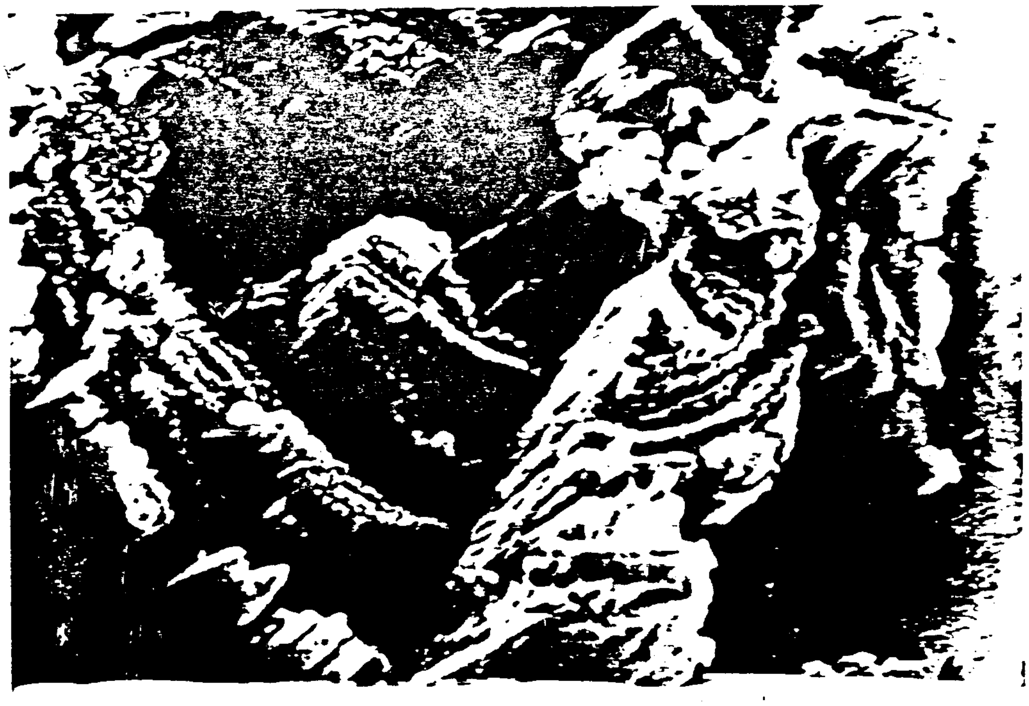

(b)

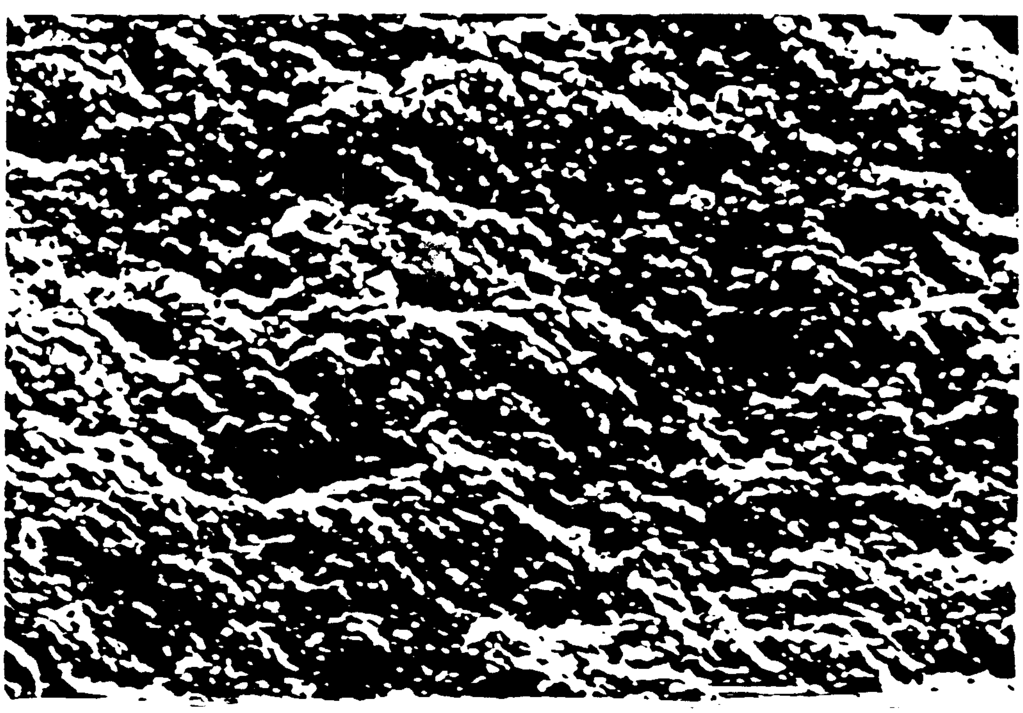

FIG. 11

(a)

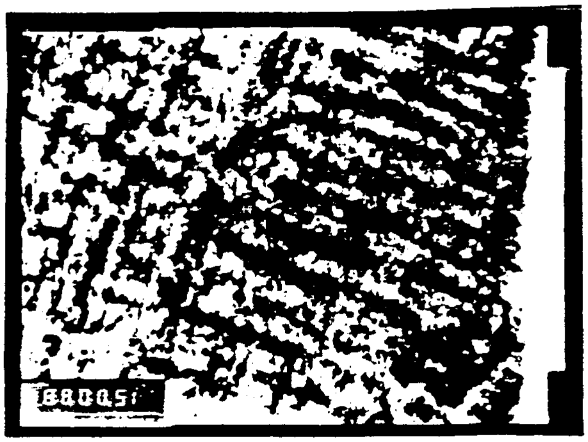

(b)